(19) Europäisches Patentamt
European Patent Office
Office européen des brevets

(11) **EP 2 597 253 B1**

(12) **EUROPEAN PATENT SPECIFICATION**

(45) Date of publication and mention
of the grant of the patent:
**07.10.2015 Bulletin 2015/41**

(51) Int Cl.:
*E21B 47/06* (2012.01)    *G06F 7/544* (2006.01)
*G01K 7/42* (2006.01)

(21) Application number: **11290542.7**

(22) Date of filing: **25.11.2011**

(54) **Dynamic prediction of downhole temperature distributions**

Dynamische Vorhersage von Bohrloch-Temperaturverteilungen

Prédiction dynamique des distributions de température de fond de trou

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.05.2013 Bulletin 2013/22**

(73) Proprietors:
• **Services Pétroliers Schlumberger**
**75007 Paris (FR)**
Designated Contracting States:
**FR**
• **Schlumberger Technology B.V.**
**2514 JG The Hague (NL)**
Designated Contracting States:
**AL BG CZ DE DK GR HU IE IT LT MK NO PL RO RS SI SK SM TR**
• **Schlumberger Holdings Limited**
**Road Town, Tortola (VG)**
Designated Contracting States:
**GB NL**
• **PRAD Research and Development Limited**
**Road Town, Tortola (VG)**
Designated Contracting States:
**AT BE CH CY EE ES FI HR IS LI LU LV MC MT PT SE**

(72) Inventors:
• **Parry, Andrew**
**92340 Bourg la Reine (FR)**
• **Zielinska, Barbara**
**91120 Palaiseau (FR)**
• **Bolchover, Paul**
**Beijing 100084 (CN)**

(74) Representative: **Rzaniak, Martin**
**Etudes & Productions Schlumberger**
**1, rue Henri Becquerel, BP 202**
**92142 Clamart Cedex (FR)**

(56) References cited:
**WO-A1-00/00715     WO-A1-2005/035944**
**GB-A- 2 399 418**

**Description**

BACKGROUND

Wells are a generally hostile environment with high temperatures and pressures, which can damage, or otherwise decrease the life-expectancy of, various types of tools such as measurement-while-drilling (MWD) tools and logging-while-drilling (LWD) tools. Some of the tools used for MWD and LWD operations include components such as various electronics that can be vulnerable to the well's high temperatures. Downhole-fluid temperature can be an important consideration in planning a drilling operation. The tools that perform measurements during drilling, and that steer the drill bit, contain electronics and sensors that can be damaged if the surrounding temperature gets above a certain limit. Thus, predicting downhole temperatures can facilitate better planning for drilling operations by facilitating tool selection, scheduling of shut-in procedures, and the like. GB 2399418 relates to a method for determining virgin formation temperature of earth formations surrounding a borehole that is drilled using drilling fluid.

SUMMARY

This summary is provided to introduce a selection of concepts in a simplified form that are further described below in the detailed description. This summary is not intended to identify key features or essential features of the claimed subject matter, nor is it intended to be used, in isolation, as an aid in determining the scope of the claimed subject matter. At a high level, embodiments of the subject matter disclosed herein relate to a transient-simulation program module that facilitates prediction of downhole temperature distributions.

Various embodiments include defining a first model for predicting a temperature distribution associated with a volume of simulated downhole fluid and a second model for predicting a temperature distribution associated with a simulated formation. In embodiments, additional models can be defined and utilized for predicting downhole temperature distributions. Embodiments include defining a drilling scenario that simulates one or more operations that can include simulation of a change in the depth of a drill string. In embodiments, temperature distributions are predicted based on the models as the drilling scenario progresses.

While multiple embodiments are disclosed, still other embodiments will become apparent to those skilled in the art from the following detailed description, which shows and describes illustrative embodiments of aspects of the claimed subject matter. Accordingly, the drawings and detailed description are to be regarded as illustrative in nature and not restrictive.

BRIEF DESCRIPTION OF THE DRAWINGS

FIG. 1 is a schematic diagram of a well-site system in accordance with embodiments of the disclosure;
FIG. 2 is a flow diagram illustrating a method of predicting downhole temperature distributions in accordance with embodiments of the disclosure;
FIG. 3 is a schematic diagram of a calculation domain in accordance with embodiments of the disclosure;
FIG. 4 is a schematic diagram of a partitioned calculation domain in accordance with embodiments of the disclosure;
FIG. 5 is a schematic diagram illustrating a modification of a mesh representation of a portion of a partitioned calculation domain in accordance with embodiments of the disclosure;
FIG. 6 is a schematic diagram illustrating a modification of a mesh representation of a portion of a partitioned calculation domain in accordance with embodiments of the disclosure;
FIG. 7 is a schematic diagram illustrating a modification of a mesh representation of a portion of a partitioned calculation domain in accordance with embodiments of the disclosure;
FIG. 8 is a schematic diagram illustrating a modification of a mesh representation of a portion of a partitioned calculation domain in accordance with embodiments of the disclosure;
FIG. 9 is a schematic block diagram depicting an illustrative operating environment in accordance with embodiments of the disclosure;
FIG. 10 is a flow diagram illustrating a method of predicting downhole temperature distributions in accordance with embodiments of the disclosure; and
FIG. 11 is a flow diagram illustrating a method of simulating progression of an operation in accordance with embodiments of the disclosure.

DETAILED DESCRIPTION

The subject matter of embodiments of the disclosure is described with specificity to meet statutory requirements. However, the description itself is not intended to limit the scope of this patent. Rather, the inventors have contemplated that the claimed subject matter might also be embodied in other ways, to include different features or combinations of features similar to the ones described in this document, in conjunction with other technologies. Moreover, although aspects of methods according to embodiments are described with reference to "blocks," the term "block" should not be interpreted as implying any particular order among or between various aspects unless the order of individual aspects is explicitly described.

When introducing elements of various embodiments of the present disclosure, the articles "a," "an," and "the" are intended to mean that there are one or more of the elements. The terms "comprising," "including," and "having" are intended to be inclusive and mean that there can be additional elements other than the listed elements. Additionally, it should be understood that references to "one embodiment" or "an embodiment" of the present disclosure are not intended to be interpreted as excluding the existence of additional embodiments.

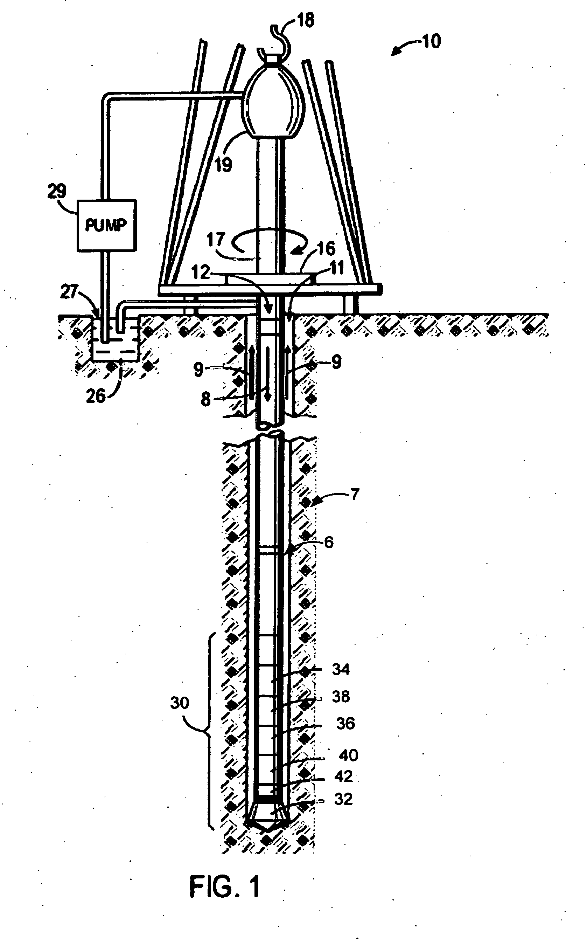

FIG. 1 illustrates a well-site system. The well-site system of FIG. 1 may be onshore or offshore. A surface system of the well-site system of FIG. 1 includes a platform and derrick assembly 10 positioned over a borehole 11. In some embodiments, the borehole 11 may be formed in subsurface formations 7 by rotary drilling using any suitable technique. A drill string 12 is suspended within the borehole 11. The drill string 12 includes a down-hole assembly 30 having a drill bit 32 disposed at its down-hole end. The platform and derrick assembly 10 includes a rotary table 16, a kelly 17, a hook 18 and a rotary swivel 19. The drill string 12 may be rotated by the rotary table 16, energized by any suitable means, which engages the kelly 17 at the upper end of the drill string 12. The drill string 12 may be suspended from the hook 18, attached to a traveling block (not shown), through the kelly 17 and the rotary swivel 19, which permits rotation of the drill string 12 relative to the hook 18. A top drive system could alternatively be used, which may be any suitable top drive system known in the art.

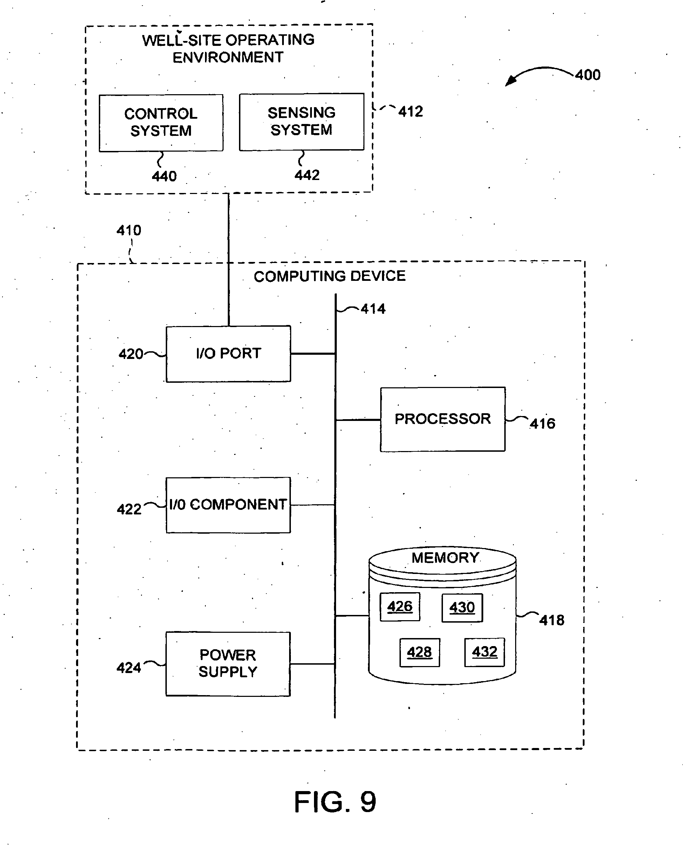

The illustrative well-site system shown in FIG. 1 is not intended to suggest any limitation as to the scope of use or functionality of embodiments disclosed throughout this document. Neither should the illustrative well-site system be interpreted as having any dependency or requirement related to any single component or combination of components illustrated therein. For example, in some embodiments, the illustrative well-site system can include additional components such as, for example, a computing device 410 as shown in FIG. 9. Additionally, any one or more of the components depicted in FIG. 1 can be, in various embodiments, integrated with any one or more of the other components depicted therein (or components not illustrated). Any number of other components or combinations of components can be integrated with the illustrative well-site system depicted in FIG. 1, all of which are considered to be within the ambit of the disclosed subject matter.

In the well-site system of FIG. 1, the surface system also includes drilling fluid (often referred to as "mud") 26. In various embodiments, the drilling fluid 26 is stored in a pit 27 formed at the well site. A pump 29 delivers the drilling fluid 26 to the interior of the drill string 12 via a port (not shown) in the swivel 19, causing the drilling fluid 26 to flow downwardly through the drill string 12 as indicated by the directional arrow 8. The drilling fluid 26 may exit the drill string 12 via ports (not shown) in the drill bit 32, and circulating upwardly through an annulus region 6 between the outside of the drill string 12 and the wall of the borehole 11, as indicated by the directional arrows 9. In this manner, the drilling fluid 26 can lubricate the drill bit 32 and carry formation 7 cuttings up to the surface, as the fluid 26 is returned to the pit 27 for recirculation.

As shown in FIG. 1, the drill string 12 includes a down-hole assembly 30. As indicated above, the down-hole assembly 30 includes a drill bit 32 at its down-hole end. The down-hole assembly 30 also includes a number of components such as a logging-while-drilling (LWD) module 34, a measuring-while-drilling (MWD) module 38, and a roto-steerable system and motor 42. In some embodiments, the LWD module 34 is housed in a drill collar and can contain one or more types of logging tools. In some embodiments, more than one LWD module can be employed, as generally represented at numeral 36. As such, references to the LWD module 34 can alternatively mean a module at the position of 36, or at any other suitable position, as well. The LWD module 34 may include capabilities for measuring, processing, and storing information, as well as for communicating with surface equipment. For example, in some embodiments, the LWD module 34 can include devices for measuring temperature, density, and the like. According to various embodiments, the LWD module 34 and/or the MWD module 38 can be communicatively coupled with any number of devices such as, for example, a computing device, other tools associated with the drill string, and the like. In embodiments, the communicative coupling can include wired communication technologies, wireless communication technologies, and the like.

According to various embodiments, the MWD module 38 can also be housed in a drill collar, as is known in the art, and can contain one or more devices for measuring characteristics of the drill string 12 and drill bit 32 and of downhole environment such as downhole temperature and/or pressure. In some embodiments, more than one MWD module can be employed, as generally represented at numeral 40. As such, references to the MWD module 38 can alternatively mean a module at the position of 40, or at any other suitable position, as well. The MWD module 38 may also include an apparatus for generating electrical power to the down-hole assembly 30. Examples of electrical generators include mud turbine generators powered by the flow of the drilling fluid and other power and/or battery systems, which may be employed additionally or alternatively. In the well-site system of FIG. 1, the MWD module 38 may include one or more of the following types of measuring devices: a weight-on-bit measuring device, a torque measuring device, a vibration measuring device, a shock measuring device, a stick slip measuring device, a direction measuring device, and/or an inclination measuring device.

The well-site system of FIG. 1 is shown to be used for a logging-while-drilling (LWD) or measurement-while-drilling (MWD) operation performed on a land based rig, but could be any type of oil/gas operations (e.g., wireline, coiled tubing, testing, completions, production, etc.) performed on a land based rig or offshore platform.

In various embodiments, a borehole is drilled in formation that is heated by geothermal activity and friction from the drill bit such that the formation being drilled has temperature distributions that are hotter than temperature distributions corresponding to the downhole fluid. Downhole fluid includes drilling fluid and, in embodiments, also can include formation cuttings (e.g., cuttings suspended in drilling fluid), other solids and/or fluids that are mixed with (or suspended in) drilling fluid, and the like. A drilling process generally is an intrinsically transient process and the instantaneous downhole-fluid temperature is often higher when drilling than when only pumping fluid. To accurately predict temperature distributions corresponding to downhole fluid while drilling, embodiments of the disclosed subject matter allow for downhole-temperature distribution predictions that account for movement of the drill string (e.g., downhole movement during a drilling operation, up-hole movement during a tripping-out operation, etc.). In embodiments, the predicted temperature distributions can be used to predict thermal stresses, downhole pressures, and the like, which can, in embodiments, be useful for planning drilling processes.

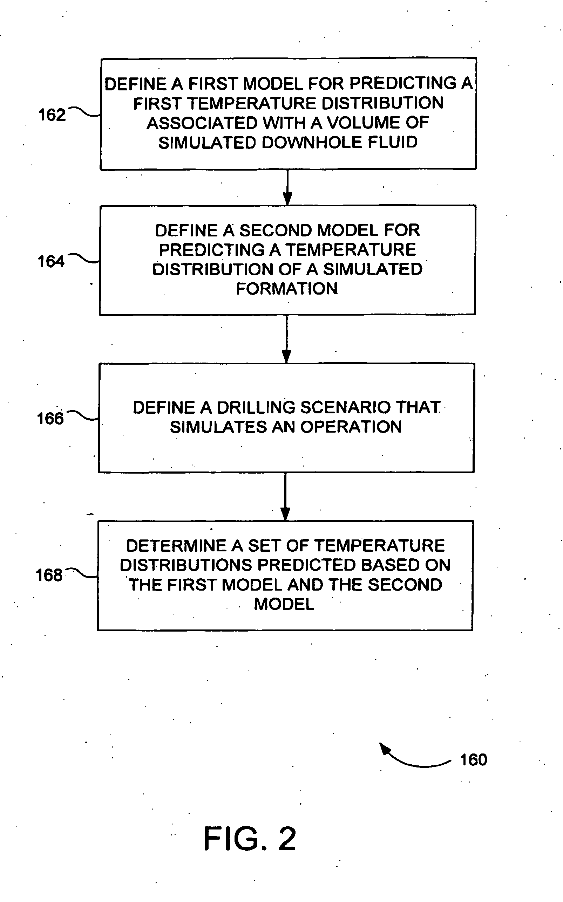

FIG. 2 shows a flowchart that depicts an example of a method 160 for predicting downhole-fluid temperature distributions for a drilling scenario in accordance with various embodiments. In the example of FIG. 2, the method 160 includes defining a model for predicting temperature distributions associated with a volume of simulated downhole fluid (block 162). A model for predicting temperature distributions of a simulated formation is also defined (block 164). A drilling scenario that simulates one or more drilling operations is defined (block 166) and a set of temperature distributions is predicted based on the first model and the second model (block 168). In various embodiments, the drilling scenario simulates one or more drilling operations throughout a given period of time and the set of temperature distributions is predicted as the drilling scenario progresses. That is, in various embodiments, each of the predicted temperature distributions of the set is determined at a different time step.

According to various embodiments, additional models can be defined and used for predicting downhole temperature distributions, as well as the first and second models referred to in FIG. 2. For example, embodiments of the method 160 can include defining a model for predicting temperature distributions associated with a simulated drill string. In various embodiments, the models may include one or more models associated with different portions of the regions of interest. For instance, in some embodiments, the model for predicting temperature distributions associated with the volume of simulated downhole fluid may actually include two or more relationships or other model components associated with two or more corresponding portions of the volume of simulated downhole fluid. For example, in an embodiment, one model can be defined for predicting temperature distributions associated with a global volume of the downhole fluid located within a simulated drill string and another model can be defined for predicting temperature distributions associated with a global volume of the downhole fluid located within an annular region defined between an outside surface of the drill string and a surface (e.g., internal bore wall) of the formation. Similarly, in some embodiments, the model for predicting temperature distributions associated with the simulated formation can include a model associated with drilled formation surrounding the borehole and another model associated with undisturbed formation just ahead of the downhole end (e.g., drill bit) of the drill string.

As the term "model" is used herein, a "model" can include any type of relationship, mathematical construct, or the like, that can be used for predicting downhole temperature distributions. In various embodiments, any number of different types of equations, sets of equations, matrices, arrays, or the like can be used. Moreover, it should be understood that the term "model" can refer to any number of different constructs, abstractions, representations, or the like that can be used for predicting temperature fields of downhole components and/or environments at a well-site. For example, in embodiments, a model can refer (in some cases, interchangeably) to an equation or a system of equations, discretized equations or systems of equations, polynomial representations of equations or systems of equations, one or more matrices representing equations or systems of equations, and the like.

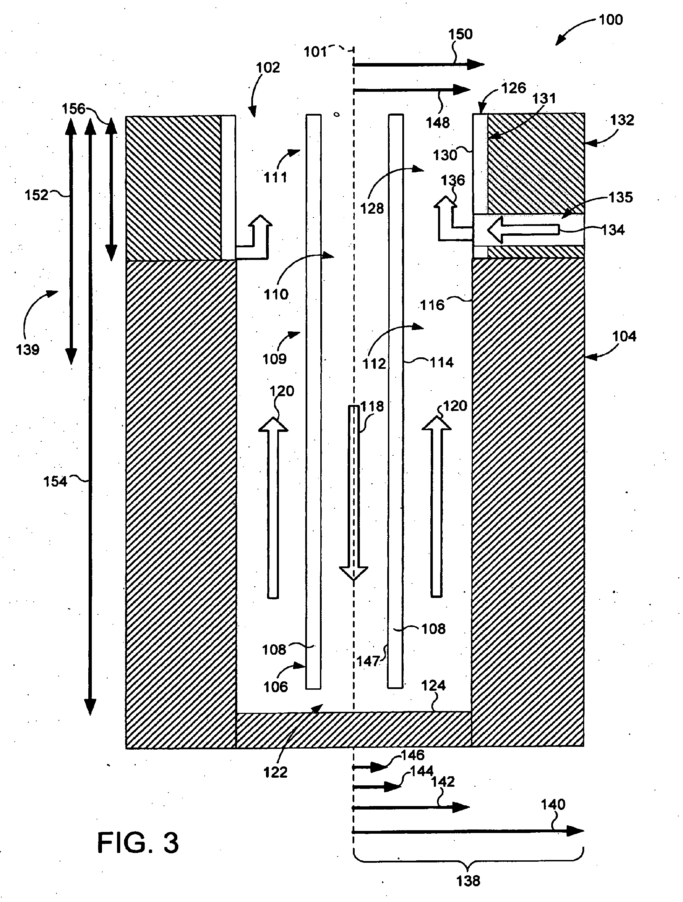

To aid in the creation of models, embodiments can include defining a calculation domain representing the space and/or time dimensions for which the models can be used for predicting temperature distributions. FIG. 3 depicts a calculation domain 100 in accordance with various embodiments. As illustrated, the calculation domain 100 includes a simulated cross-section of a drilling environment (e.g., a well-site). The calculation domain 100 includes a simulated borehole 102 within a surrounding simulated formation 104. According to various embodiments, the calculation domain 100 can be considered to be axially-symmetric - that is, an assumption can made, in various embodiments, that the temperature distributions of the various components of the drilling environment are symmetrical with respect to an axis 101 that is centered within the simulated borehole 102. This assumption allows for a calculation domain 100 to be represented by a cross-sectional simulation of the drilling environment and predicted temperature fields to be extrapolated throughout the cylindrical drilling environment. According to various embodiments, the simulated borehole 102 can be angled and/or can include turns, curves, or the like. In such embodiments, the simulated borehole 102 can be conceptually segmented into axially-symmetric portions of the simulated borehole 102 to take advantage of aspects of embodiments of the technology described herein.

A simulated drill string 106 is disposed within the borehole 102 and is represented by a pair of parallel, opposed wall segments 108 with a flow conduit 110 defined between them. In some embodiments, each wall segment 108 may represent a tangential portion of a cylindrical drill string 106 such as, for example, the drill string 12 depicted in FIG. 1. In other embodiments, the simulated drill string 106 can be represented as a tapered drill string, a non-uniform drill string, or the like. In such embodiments, the opposed wall segments 108 might not be parallel to one another. Although the simulated drill string 106 is illustrated as being centrally located in the borehole 102, in some embodiments, the simulated drill string 106 can be located off-center within the borehole 102. Additionally, in embodiments, the drill string 106 can be oriented at an angle with respect to the borehole 102.

In the calculation domain 100 shown in FIG. 3, the simulated drill string 106 includes both a down-hole portion 109 and a portion 111 that extends from the borehole 102 into an area surrounded by a simulated riser 126. In some embodiments, the simulated drill string 106 includes only a down-hole portion 109. According to some embodiments, a portion of the borehole 102 can be included in the calculation domain 100, while in other embodiments, the entire borehole 102 can be included in the calculation domain 100. Any number of different portions of the simulated borehole 102 and/or the simulated drill string 106, and/or various combinations thereof, can be represented in a calculation domain, in accordance with various embodiments.

An annular region 112 is defined between an outside surface 114 of the simulated drill string 106 and a surface 116 of the simulated formation 104, and is represented as a two-dimensional region 112 in the calculation domain 100. According to various embodiments, a simulated drilling fluid (not shown) can pass through a flow conduit 110 defined within the simulated drill string 106 in a direction represented by the arrow labeled with reference numeral 118, exit the simulated drill string 106 at or near the down-hole end of the simulated drill string 106 and travel through the annular region 112, generally in a direction indicated by the arrows labeled with reference numeral 120.

As shown in FIG. 3, the calculation domain 100 also includes a region of downhole fluid 122 located between the downhole end of the drill string 106 and an adjacent portion of undisturbed formation 124. In some embodiments, the drill string 106 may be simulated as being in contact with the undisturbed formation 124, in which case the calculation domain 100 need not include the region of fluid 122 below the drill string 106. During a drilling operation, the undisturbed formation 124 below the drill string 106 often will have relatively high temperatures due to geothermal effects and friction-generated heat from the action of a drill bit (e.g., drill bit 32) cutting the undisturbed formation 124. Accordingly, in some embodiments, the portion of undisturbed formation 124 below the drill string 106 can be modeled using parameters that represent the far-field temperature values of the undisturbed formation 124. In other embodiments, such as, for example, in a shallow borehole, the undisturbed formation 124 below the drill string 106 can be modeled in a manner similar to other portions of formation 104 or in any other suitable manner.

As illustrated in FIG. 3, the calculation domain 100 also includes a simulated riser 126 that surrounds the drill string 106 in a region just above the formation 104. In some embodiments, the riser 126 can be used, for example, in underwater drilling scenarios, as a barrier between an upper region 128 of the borehole 102 and the surrounding water 132. In some embodiments, a boost-line flow 134 of drilling fluid can be pushed through a flow conduit 135 of the riser 126 and into the borehole 102 as shown by the arrow labeled with reference numeral 136. Accordingly, in some embodiments, aspects of the models and methods described herein can include models corresponding to the riser 126, the upper region 128 of the borehole 102, a boost-line flow 134, and the like. In other embodiments (including some underwater drilling scenarios), the calculation domain 100 may not include the riser 126.

As is further illustrated in FIG. 3, the calculation domain 100 can be defined according to a number of dimensional representations. For example, in some embodiments, the calculation domain 100 can be a cylindrical domain such as the calculation domain 100 represented by the simplified depiction of FIG. 3 (e.g., the depiction in FIG. 3 is simplified because it illustrates a cross-section of a cylindrical calculation domain 100). In other embodiments, the calculation domain 100 can be defined according to any other number of shapes and with any number of other dimensions. In FIG. 3, the calculation domain 100 is defined according to a set 138 of radial dimensions and a set 139 of axial dimensions. In various embodiments, any number of the radial and/or axial dimensions can change over time such as, for example, during a drilling operation.

As shown in FIG. 3, the set 138 of radial dimensions includes a radial dimension 140 corresponding to a radius of the calculation domain 100; a radial dimension 142 corresponding to the radius of the borehole 102; a radial dimension 144 corresponding to an external radius of the drill string 106 (e.g., from the center of the drill string 106 to the outside surface 114 of the drill string 106); and a radial dimension 146 corresponding to an internal radius of the drill string 106 (e.g., an internal radius of a flow conduit within the drill string 106, which is represented by a radius extending from the center of the drill string 106 to an inside surface 147 of the drill string 106). According to various embodiments, any number of additional radii can be defined, as well as combinations of the illustrated radii and/or other radii. In some embodiments, fewer radii than those illustrated can be defined within the calculation domain 100.

In various embodiments, any one or more of the radii described above can be represented by a function of any one or more of the other radii and/or by a function of time. For example, in some embodiments, the radial dimension 140 corresponding to the calculation domain 100 can be represented by a function of the other radii 142, 144, and 146. In some embodiments, the radii 140, 142, 144, and 146 can also be used to represent radial dimensions of sub-domains, mesh cells, and the like. In other embodiments, cross-sectional area dimensions can be used instead of, or in addition to, radial dimensions. Additionally, as shown in FIG. 3, a riser 126 can be simulated using, for example, a radial dimension 148 representing a radius from the center of the borehole 102 to an inside surface 130 of the riser 126 and a radial dimension 150 representing a radius from the center of the borehole 102 to an outside surface 131 of the riser 126.

As shown in FIG. 3, the set 139 of axial dimensions includes an axial dimension 152 representing a borehole depth and an axial dimension 156 representing a riser depth. For the purposes of the discussions within this disclosure, the axial dimensions are characterized as being defined along an "x" axis 101, although individuals having skill.in the relevant arts will understand that any other designation of axial dimension may be used. In some embodiments, the axial dimension 152 can be used to represent a length of the drill string 106, a length of the calculation domain 100, and the like. According to various embodiments, the length of the axial dimension 152 can change as a drilling scenario progresses. For example, in an embodiment, the length of the axial dimension 152 can be represented by a translation parameter that includes a first value (as represented by the arrow labeled with reference number 152) at a first time step and a second value (as represented by the arrow labeled with reference number 154) at a second time step; and the second value can be less than, greater than, or equal to, the first value. Similarly, the axial dimension 156 associated with the riser 126 can change over time.

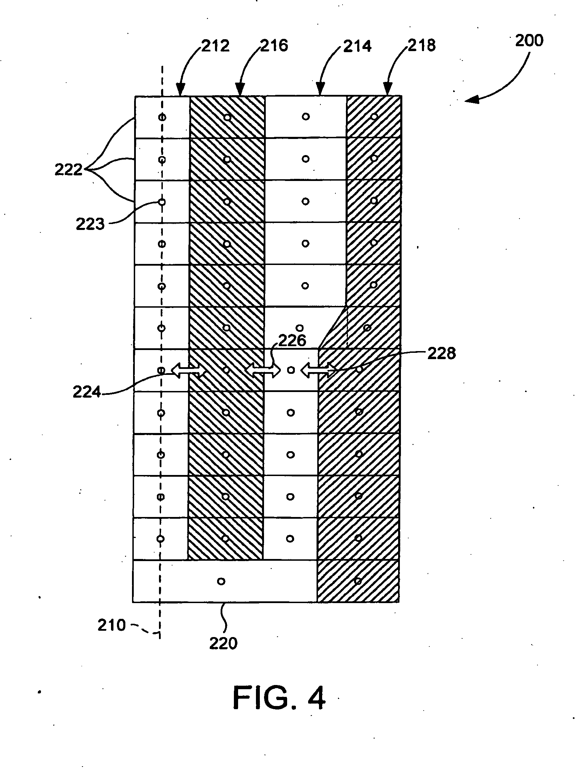

According to various embodiments, the calculation domain 100 can be partitioned into sub-domains to facilitate model generation, calculation, and the like. FIG. 4 shows a schematic diagram depicting a portion of a partitioned calculation domain 200. In some embodiments, an entire calculation domain can be partitioned. In other embodiments, by assuming axial-symmetry of the calculation domain, aspects of embodiments of the modeling and calculating procedures described herein can be simplified and the resulting predictions extrapolated across the entire calculation domain.

For example, FIG. 4 depicts a partitioned calculation domain 200. As shown, the partitioned calculation domain 200 includes a first downhole-fluid sub-domain 212, a second downhole-fluid sub-domain 214, a drill-string sub-domain 216, and a formation sub-domain 218. Each sub-domain is represented as a mesh formed from a number of mesh cells 222. In various embodiments, each mesh cell 222 can include a center point 223 with which predicted values of temperature can be associated.

The partitioned calculation domain 200 shown in FIG. 4 is not intended to suggest any limitation as to the scope of use or functionality of embodiments disclosed throughout this document. Neither should the partitioned calculation domain 200 be interpreted as having any dependency or requirement related to any single component or combination of components illustrated therein. For example, in some embodiments, the partitioned calculation domain 200 can include additional components such as, for example, additional sub-domains, meshes, mesh cells, or the like. Additionally, any one or more of the components depicted in FIG. 4 can be, in various embodiments, integrated with any one or more of the other components depicted therein (or components not illustrated). Any number of other components or combinations of components can be integrated with the partitioned calculation domain 200 depicted in FIG. 4, all of which are considered to be within the ambit of the disclosed subject matter.

According to various embodiments, the first downhole-fluid sub-domain 212 can be centered along an axis 210 that may represent, for example, the central axis of the calculation domain 200. Additionally, as shown in FIG. 4, the partitioned calculation domain 200 includes a mesh 220 representing a portion of undisturbed formation. In the illustrated embodiment, the mesh 220 includes a single mesh cell, however, in other embodiments, the mesh 220 can include any number of mesh cells. The partitioned calculation domain 200 can be used, in various embodiments, to establish parameters for defining models for predicting downhole-temperature distributions corresponding to the various sub-domains 212, 214, 216, and 218.

For example, in some embodiments, each model can be defined as a function of a set of parameters. Examples of such parameters include axial-dimension values, radial-dimension values, initial temperature values, flow rates, rates of penetration, heat-source terms, and the like. In some embodiments, for instance, heat-source terms can include temperature fluxes between various sub-domains such as the temperature flux 224 between the first downhole-fluid sub-domain 212, and the drill-string sub-domain 216, which represents, in some embodiments, temperature fluxes between the downhole fluid (e.g., drilling fluid) located within the drill string and the wall of the drill string; the temperature flux 226 between the drill-string sub-domain 216 and the second downhole-fluid sub-domain 214, which represents, in some embodiments, temperature fluxes between the wall of the drill string and the downhole fluid located in the annular region defined between the outside surface of the drill string and the surface of the formation (referred to herein, interchangeably, as the "annulus"); and the temperature flux 228 between the second downhole-fluid sub-domain 214 and the formation sub-domain 218, which represents, in some embodiments, temperature fluxes between the downhole fluid in the annulus and the formation. In other embodiments, other temperature fluxes or combinations of temperature fluxes can be represented.

Similarly, other local and distributed heat-source terms can be accounted for within the context of a partitioned calculation domain such as, for example, distributed heat generation in the drill string and annulus fluids due to viscous dissipation (e.g., $|dp/dx|.Q.\delta x$, where p is the fluid pressure, Q is the volumetric flow rate, and x is the axial dimension); distributed heat generation due to torque losses when the drill string is rotated; local heat generation due to pressure drop ($\Delta p$) at bit and reamer nozzles, leading to local viscous dissipation (e.g., $\Delta p.Q$); local heat generation associated with drilling-fluid motors, turbines, and/or other downhole tools; local heat generation due to influx of hot rock at bottom hole during a drilling operation (e.g., ROP. $\pi r_{fi}^2.\rho_f Cp_f (T_\infty - T)$, where T is the fluid temperature at the borehole bottom, $T_\infty$ is the far-field temperature boundary value, $r_{fi}$ is the radial dimension of the formation, $C_{pf}$ is the specific heat capacity of the formation, $\rho_f$ is the density of the formation, and ROP is a rate of penetration); local heat injection due to fluid injection at the boost-line inlet (e.g., $\rho_b.C_{pb}.Q_b(T_b - T_o)$, where $\rho_b$ is the density of the boost-line fluid, $C_{pb}$ is the specific heat capacity of the boost-line fluid, $Q_b$ is the flow rate of the boost-line fluid, $T_o$ is the annulus fluid temperature at the boost-line, and $T_b$ is the boost-line fluid temperature); distributed heat generation along the annulus fluid due to friction generated by the cutting action of the drill string against the formation at the bottom of the borehole; and the like.

According to embodiments of the disclosure, models can be created using laws of physics, engineering, mathematics, and the like. In some embodiments, models can be refined from such laws by applying any number of underlying assumptions about various properties of the aspects of the system being modeled. Although the following discussion describes defining models according to one embodiment using one set of assumptions, any other suitable manner of defining models (using any number of assumptions) can be utilized within the scope of the disclosed subject matter.

According to various embodiments, temperature distributions in solids generally are modeled using conduction-dominant models and temperature distributions in liquids generally are modeled using advection-dominant models. To facilitate defining these models, according to an embodiment, an assumption can be made that axial conduction can be neglected (e.g., not addressed by the models) because in the drill string and formation, the radial temperature gradients are much larger than the axial temperature gradients. Similarly, in some embodiments, axial conduction of heat in a moving fluid can be negligible for high Peclet numbers and, therefore, can be neglected by the models. However, in some embodiments, axial conduction in stagnant fluid (e.g., stagnant fluid located below a downhole end of a drill string during a tripping operation in which drilling fluid is not pumped into the borehole) may be much weaker than radial conduction, allowing such stagnant fluid to be modeled in a manner similar to the solids.

In some embodiments, another assumption can be made that while downhole fluid is flowing, the bulk fluid temperature within the drill string, $T_i$, or annulus, $T_o$, along with the formation wall temperature and formation wall heat-transfer coefficient can be used to model the formation wall heat transfer. In some embodiments, this assumption can be used because the thermal boundary layers are thin (e.g., the relationships between the coefficients correspond to a high Nusselt number). In some embodiments, this assumption can be used because the downhole fluid is being mixed by the motion of the drill string. In some embodiments, this assumption can be used because of the displacement of the downhole fluid in the annulus by the moving drill string.

In some embodiments, it may be assumed that the axial movement of the drill string during a time step has a negligible effect on the axial transport of fluid temperature such as, for example, when the axial velocity of the drill string is much less than the axial velocity of the downhole fluid. Using this assumption, the defined models can neglect the convection by the drill-string movement. In those cases where the drill-string movement cannot be neglected, an Arbitrary Lagrangian-Eulerian (ALE) technique for the convection terms can be used to account for mesh movement.

In some embodiments, it can be assumed that the axial advancement of the borehole during a time step has a negligible effect on the radial variation of temperatures in the solids. In the drill-string material, for example, the temperatures are advected with the drill-string finite volume axial velocity and the axial energy advection due to mesh movement may be neglected as this advection is relatively small compared with radial temperature variation. In some embodiments, the material initial temperatures of a riser and/or portions of the formation for a new time step can be spatially interpolated from predicted values associated with previous time step positions, for example, when the borehole is sufficiently deep such that the heat generated around the drill bit is negligible with respect to the riser and/or the portions of the formation.

In some embodiments, a combination of all the assumptions discussed above can be utilized to generate a set of models for predicting temperature distributions corresponding to a first downhole-fluid sub-domain, a second downhole-fluid sub-domain, a drill-string sub-domain, and a formation sub-domain. In other embodiments, these models (and/or additional models) can be generated using any other combination of assumptions. In some embodiments, a pure monolithic approach can be used to define models for a calculation domain that do not include any of these assumptions. By way of example, a set of models that is defined using the assumptions discussed above is described below.

The embodiment described below is not intended to suggest any limitation as to the scope of use or functionality of aspects of embodiments disclosed throughout this document. Neither should the embodiment be interpreted as having any dependency or requirement related to any single aspect or combination of aspects described below. For example, in some embodiments, the models can include additional equations, equations based on other assumptions, or the like. Additionally, any one or more of the relationships (e.g., equations, correlations, etc.) described below can be, in various embodiments, integrated with any one or more of the other relationships described herein (or relationships not described). Any number of other relationships, aspects or combinations of such relationships and/or aspects can be integrated with the embodiment described below, all of which are considered to be within the ambit of the disclosed subject matter.

In an embodiment, the transport of bulk fluid temperature inside a flow conduit within a simulated drill string, $T_i$, is modeled by a one-dimensional-transient advection equation. For a finite volume of the global volume represented by the first downhole-fluid sub-domain, $\delta V = \delta x \cdot \pi r_{pi}^2$, this equation takes the form of Eq.(1) below:

$$\int_{\delta V}\left(\frac{\partial \rho C_p T_i}{\partial t} + \frac{\partial \rho C_p U_i T_i}{\partial x}\right)dV = \delta q_{pi} + \delta q_i, \qquad Eq.(1)$$

$$for$$

$$\delta q_{pi} = h_{pi}\delta A_{pi}(T_{pi} - T_i),$$

and where $\delta A_{pi} = \delta x \cdot 2\pi r_{pi}$ is the elemental area of the inner surface of the flow conduit within the drill string, $r_{pi}$ is the internal radius of the flow conduit, x is the axial dimension, $\rho$ is the density of the downhole fluid within the drill string, $C_p$ is the specific heat capacity of the downhole fluid, $U_i$ is the axial velocity of the downhole fluid, and $h_{pi}$ is the heat transfer coefficient at the inner surface of the flow conduit within the drill string. Additionally, in Eq.(1), $\delta q_i$ is the local or distributed heat source in the downhole fluid located within the drill string, $\delta q_{pi}$ is the heat flux on the inside of the flow conduit (used as a temperature gradient condition), and $T_{pi}$ is the temperature at the inner surface of the flow conduit.

In this embodiment, the transport of bulk fluid temperature inside the annulus, $T_o$, also is modeled by a one-dimensional-transient advection equation, which takes the form of Eq.(2) below:

$$\int_{\delta V}\left(\frac{\partial \rho C_p T_o}{\partial t} + \frac{\partial \rho C_p U_o T_o}{\partial x}\right)dV = \delta q_{po} + \delta q_{fi} + \delta q_o, \qquad Eq.(2)$$

$$for$$

$$\delta q_{po} = h_{po}\delta A_{po}(T_{po} - T_o)$$

$$and$$

$$\delta q_{fi} = h_{fi}\delta A_{fi}(T_{fi} - T_o),$$

where $\delta A_{po} = \delta x \cdot 2\pi r_{po}$ and $\delta A_{fi} = \delta x \cdot 2\pi r_{fi}$ are the elemental areas of the outer surface of the drill string and the surface of the formation (or riser), respectively. In Eq.(2), $r_{po}$ is the radius of the outer surface of the drill string, $r_{fi}$ is the radius of the inner surface of the formation (e.g., borehole radius), x is the axial dimension, $\rho$ is the density of the downhole fluid, $C_p$ is the specific heat capacity of the downhole fluid, $U_o$ is the axial velocity of the downhole fluid in the annulus, and $h_{po}$ and $h_{fi}$ are the respective heat transfer coefficients at the outer surface of the drill string and the inner surface of the formation. Additionally, in Eq.(2), $\delta q_o$ is the local or distributed heat source in the downhole fluid located within the annulus, $\delta q_{fi}$ is the heat flux on the formation surface (used as a temperature gradient condition), and $\delta q_{po}$ is the heat flux on the outside drill-string surface (also used as a temperature gradient condition).

In this embodiment, the transient variation of the temperature distributions within the wall of the drill string, $T_p$, is modeled with a one-dimensional-radial-transient conduction equation for the finite volume of the global volume represented by the drill-string sub-domain, $\delta V = \delta x \cdot \pi \delta r^2$, which takes the form of Eq.(3) below:

$$\int_{\delta V}\left(\frac{\partial \rho_p C_{pp} T_p}{\partial t} - \frac{k_p}{r}\frac{\partial}{\partial r}\left(r\frac{\partial T_p}{\partial r}\right)\right)dV = -\delta q_{pi}\cdot \delta(r - r_{pi}) - \delta q_{po}\cdot \delta(r - r_{po}) \qquad Eq.(3)$$

where r is the radial dimension, x is the axial dimension, $\rho_p$ is the density of the drill string, $C_{pp}$ is the specific heat capacity of the drill string, $k_p$ is the thermal conductivity of the drill string, $r_{pi}$ is the radius of the inner surface of the flow conduit within the drill string, and $r_{po}$ is the radius of the outer surface of the drill string. In Eq.(3), $\delta q_{pi}$ is the heat flux on the inner surface of the flow conduit within the drill string (used as a temperature gradient condition) and $\delta q_{po}$ is the heat flux on the outside drill-string surface (also used as a temperature gradient condition. The transient variation of the temperature in the formation (and/or in the riser), $T_f$, also is modeled using a one-dimensional-radial-transient conduction equation, which takes the form of Eq.(4) below:

$$\int_{\delta V}\left(\frac{\partial \rho_f C_{pf} T_f}{\partial t} - \frac{k_f}{r}\frac{\partial}{\partial r}\left(r\frac{\partial T_f}{\partial r}\right)\right)dV = -\delta q_{fi}\cdot\delta(r - r_{fi}) \qquad Eq.(4)$$

where $\rho_f$ is the density of the formation, $C_{pf}$ is the specific heat capacity of the formation, $k_f$ is the thermal conductivity of the formation, and $r_{fi}$ is the radius of the inner surface of the formation. In Eq.(4), $\delta q_{fi}$ is the heat flux on the formation surface (used as a temperature gradient condition).

In this embodiment, the heat transfer coefficients, $h_{pi}$, $h_{po}$ and $h_{fi}$, can be determined using an empirical relationship such as, for example, represented below:

$$Nu_D = \frac{hD}{k} = 0.023\left(\frac{\rho U D}{\mu}\right)^{0.8}\left(\frac{\mu C_p}{k}\right)^{1/3} \qquad Eq.(5)$$

where $N_{uD}$ is the Nusselt number, $D$ is the hydraulic diameter of the relevant flow conduit (e.g., $D=4A/P$ where $P$ is the perimeter around the cross-sectional area, $A$, of a flow conduit within the drill string, or a flow conduit within the annulus), $k$ is thermal conductivity, p is the fluid density, $\mu$ is the dynamic viscosity of the fluid, $C_p$ is the specific heat capacity, and $U$ is the axial velocity of the downhole-fluid. In some cases, the flow conduit within the drill string can include a portion of the drill string's interior through which downhole fluid can flow. Similarly, in some cases, the flow conduit within the annulus can include a region of the annulus through which downhole fluid can flow. For example, in some cases, the flow conduit within the annulus is the entire volume of the annulus, while, in other cases, the flow conduit within the annulus is a portion of the volume of the annulus (e.g., in some implementations, an obstruction such as a protruding reamer, a protruding tool, solid formation, and the like, can be located within the volume of the annulus).

In this embodiment, it can be assumed that $h_{po} = h_{fi}$. In some cases, this correlation can be used in turbulent and transitional regimes. In some embodiments, if $Nu_D$ is smaller than a predetermined laminar flow value of the drill string or the annulus, the respective laminar flow values of the drill string or the annulus may be used. For example, if $Nu_D$ is smaller than the laminar flow value of 4.0 for the drill string, or 8.0 for the annulus, these respective laminar flow values may be used, although other predetermined laminar flow values could be used instead. In some cases, the effects of drill-string rotation on the heat transfers are accounted for in the models. In other cases, these effects are not accounted for in the models, while, in other cases, some of the effects are accounted for. Additionally, in some cases, the heat transfer coefficient for the riser outer surface can be determined from the Churchill and Bernstein's correlation:

$$Nu_D = \frac{h_s D_r}{k_s} = 0.3 + \frac{0.62\left(\frac{\rho_s U_s D_r}{\mu_s}\right)^{1/2}\left(\frac{\mu_s C_{ps}}{k_s}\right)^{1/3}}{\left(1 + \left(\frac{0.4}{\left(\frac{\mu_s C_{ps}}{k_s}\right)}\right)^{2/3}\right)^{1/4}}\left(1 + \left(\frac{\left(\frac{\rho_s U_s D_r}{\mu_s}\right)}{282000}\right)^{5/8}\right)^{4/5} \qquad Eq.(6)$$

where $D_r$ is the outer diameter of the riser, $h_s$ is the heat transfer coefficient of the seawater, $k_s$ is the thermal conductivity of the seawater, $\rho_s$ is the density of the seawater, $U_s$ is the axial fluid velocity of the seawater, $\mu_s$ is the dynamic viscosity of the seawater, and $C_{ps}$ is the specific heat capacity of the seawater.

The models according to this embodiment, or other models according to other embodiments, can be used to predict downhole-temperature distributions. In some embodiments, the equations are solved, using a monolithic approach, to predict temperature distributions of regions of interest such as, for example, a volume of the downhole fluid, the drill string, the formation, and the like. In other embodiments, the equations can be solved with an iterative approximation approach such as by using a numerical solution method. According to various embodiments, the numerical solution method can be any type of numerical solution method including, for example, finite difference methods, finite element methods, spectral analysis, finite volume methods, and the like.

With reference to FIG. 2, as indicated above, a drilling scenario that simulates one or more drilling operations is defined (block 166). According to various embodiments, a drilling scenario can include a set of parameters associated with one or more operations. In some embodiments, such parameters can include values for ROP (rate of penetration), final borehole depth, drilling-fluid flow rate, initial temperatures, shut-in intervals, and the like. Drilling scenario parameters can also include other parameters such as, for example, parameters associated with the models, translation parameters (e.g., time-step intervals, etc.), and the like. Any number of different parameters can characterize a drilling scenario, which can include any number of different operations. Examples of operations include shut-in, tripping-in, tripping-out, drilling, reaming, back-reaming, circulating, and the like. In some embodiments, a drilling scenario can represent a number of different operations simultaneously, thereby facilitating modeling of "what-if" situations that can be used during operation planning and/or during operations.

As shown at block 168 and indicated above, embodiments of the method 160 further include determining a set of temperature distributions predicted based on the first and second models. In some embodiments, predicting a set of temperature distributions based on the first and second models may include predicting temperature distributions associated with any one or more of the sub-domains. In some embodiments, for example, temperature distributions may be predicted using a segregated approach in which temperature distributions are predicted for each of the sub-domains and aggregated for presentation.

According to various embodiments, predicting temperature distributions may include determining a number of mesh cells to generate. In some embodiments, the number of mesh cells for each of the meshes corresponding to the sub-domains can be determined based on the final depth of the borehole. In other embodiments, the number of mesh cells for each sub-domain can be defined as a function of some other variables such as, for example, time, average temperature, type of operation, and the like. In some embodiments, solid mesh cells - mesh cells associated with the drill string, drilled formation, and undisturbed formation - can include different properties (e.g., as defined by different parameters) than fluid mesh cells - mesh cells associated with downhole fluid. According to some embodiments, to facilitate a representation of advancement of the drill string, solid mesh cells may be switched to fluid mesh cells progressively, as the drill string moves through undisturbed formation.

In various embodiments, the modeling equations can be solved using any number of techniques such as, for example, an implicit finite volume technique. In an embodiment, the modeling equations can be discretized (e.g., by using a standard volume technique or other discretization technique). The discretized modeling equations can be solved using any number of different methods such as, for example, the tri-diagonal matrix algorithm. During operations in which downhole fluid is flowing, the respective temperature in the downhole fluid, drill-string wall, formation and riser can be calculated in a segregated approach where coupling may be achieved by repeated sequential solution of the modeling equation corresponding to each sub-domain.

According to some embodiments, predicted temperature distributions associated with the wall of the drill string can be calculated using heat flux conditions on the inside and outside surfaces of the drill string, which may be predicted based on the latest iteration of predicted downhole-temperature distributions. According to some embodiments, temperature distributions associated with the simulated formation can be calculated using heat flux conditions on the surface of the formation (i.e., the borehole wall). In various embodiments, these distributions may be predicted using the latest iteration of predicted downhole-temperature distributions. In some embodiments, temperature distributions associated with the formation can also be calculated based, at least in part, on the fixed-value far-field temperature associated with the portion of undisturbed formation ahead of the drill bit.

In some embodiments, the predicted temperature distributions corresponding to the drill string and the formation, can be determined while evaluating the heat-source terms in the downhole-fluid modeling equations. In some embodiments, determining predicted temperature distributions can include performing coupling iterations throughout the entire operation. In other embodiments, certain portions of the operation can be modeled using coupling iterations, while other portions can be modeled without coupling iterations. For example, in an embodiment, when predicting temperature distributions of downhole fluid, formations, drill-strings, and the like, during shut-in operations and/or predicting temperature distributions of the stagnant fluid ahead of the drill bit during a tripping-out operation, the axial temperature transport may be disregarded and the radial heat conduction at each depth can be solved using a monolithic approach, without coupling iterations.

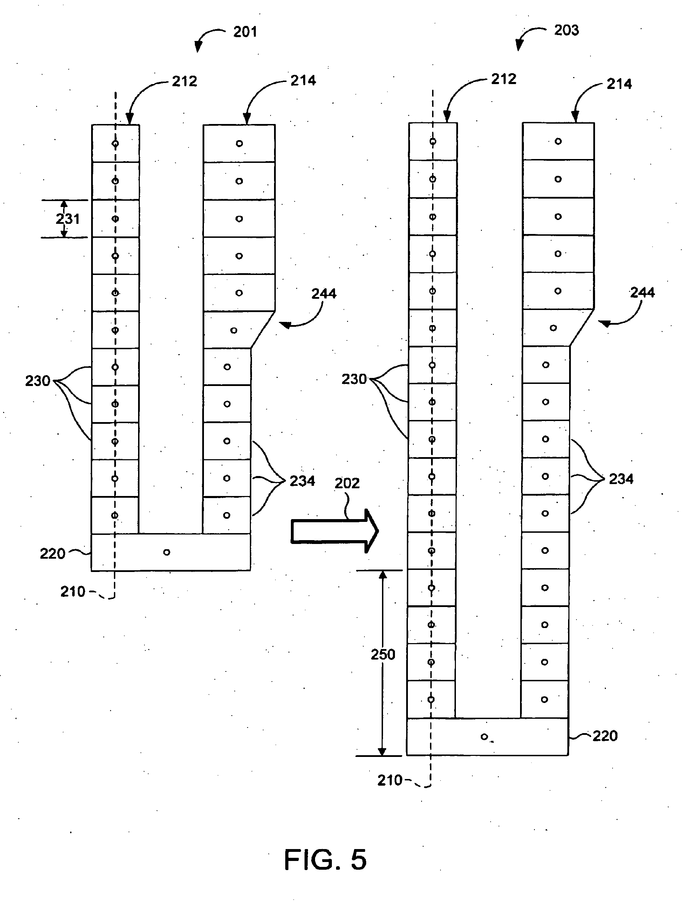

In some embodiments, predicting downhole-temperature distributions can include defining a finite volume representation corresponding to each sub-domain and applying a finite volume method to the modeling equations with respect to the meshes. FIG. 5 shows a finite volume representation 201 represented by the first and second downhole-fluid sub-domain 212 and 214, illustrated in FIG. 4, respectively, and the undisturbed formation sub-domain 220. It should be appreciated that the formation and drill-string sub-domains 216 and 218 may also be utilized, but for the purposes of the following discussion, they are not illustrated for clarity.

In FIGS. 5-8, the finite volume representation 201 of the downhole-fluid sub-domains 212 and 214 corresponds to a first time step. As illustrated in FIG. 5, for example, a translation operation that characterizes a transition 202 from the first time step to a second time step can be simulated by modifying the finite volume meshes 212, 214, and 220 to define a modified finite volume representation 203. As indicated above, a drilling scenario can include any number of different types of operations. In some embodiments, the type of operations (and parameters associated therewith) can be used to determine a technique for modifying a mesh.

For example, if the operation is a translation operation - an operation that includes a spatial movement of at least a portion of the simulated drill string (e.g., a drilling operation, a tripping operation, a reaming operation, etc.) - the meshes 212, 214, and 220 can be translated. In some embodiments, translation can be simulated based on a selected rate of penetration (ROP). As the term "ROP" is used herein, an ROP can refer to any rate (e.g., distance/time) corresponding to a movement of the drill string (or a portion thereof, a tool attached thereto, etc.). In some embodiments, for example, a drilling operation can be simulated according to an ROP that simulates the rate at which a drill string advances through undisturbed formation, where the direction of drilling along a defined axis (referred to herein as an x-axis) is considered to be a positive direction. Thus, in some embodiments, a tripping-out operation can be simulated by a translation based on a negative ROP, in which the simulated drill string is receded. Similarly, as another example, a reaming operation can be simulated according to a positive ROP associated with a simulated reamer attached at any desired point along a simulated drill string.

According to some embodiments, an operation in which a drill string is advanced can be simulated by enlarging corresponding sub-domains and an operation in which a drill string is receded can be simulated by contracting corresponding sub-domains. In other embodiments, these operations can be simulated by defining additional, or fewer, sub-domains and corresponding meshes. Additionally, in some embodiments, such an operation can be simulated by enlarging or contracting one or more sub-domains and defining additional or fewer sub-domains. According to some embodiments, a mesh can be translated by adding mesh cells to the mesh (e.g., in the case of a positive ROP). In other embodiments, a mesh can be translated by removing mesh cells from the mesh (e.g., in the case of a negative ROP).

For example, as shown in FIG. 5, the first downhole-fluid sub-domain mesh 212 is formed of a number of mesh cells 230 and the second downhole-fluid sub-domain mesh 214 is formed of a number of mesh cells 234. In the illustrated embodiment, the transition 202 is simulated using a first finite volume representation 201 corresponding to a first time step and a second finite volume representation 203 corresponding to a second time step. The meshes 212 and 214 are expanded by adding a number of mesh cells 230 and 234, respectively, to the meshes 212 and 214. The addition of the mesh cells 230 and 234 simulates a translation characterized by an overall expansion 250 of the sub-domains 212 and 214 in a direction along the axis 210, representing a corresponding increase in the depth of the simulated borehole. In some embodiments, mesh cells 230 and 234 can be added at any point in the meshes 212 and 214. In other embodiments, mesh cells may be added by defining new sub-domains corresponding to the added mesh cells.

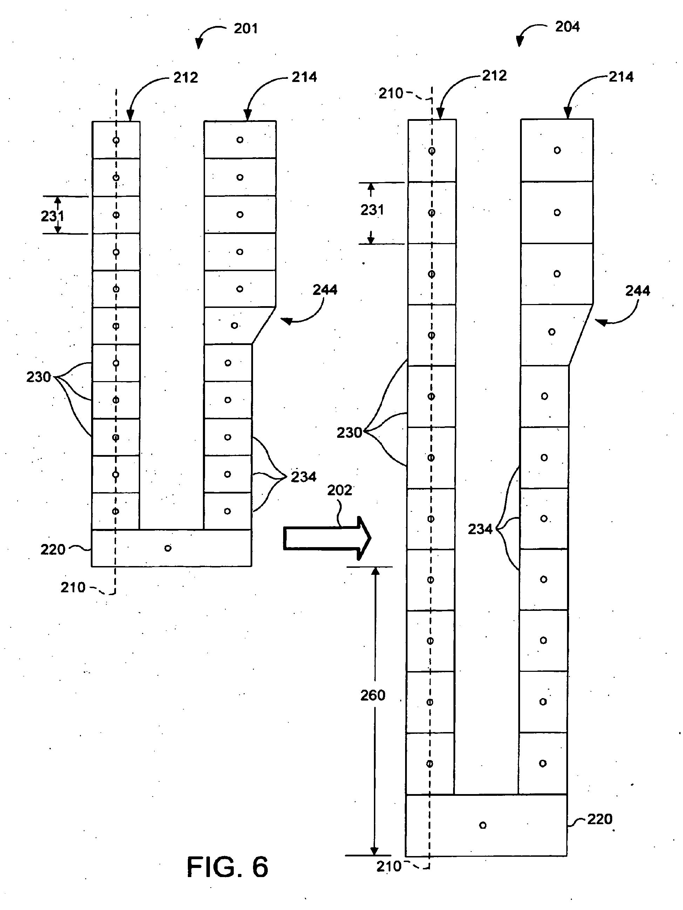

In various embodiments, a mesh can be translated by expanding or contracting one or more of the mesh cells. For example, in FIG. 6, the transition 202 is simulated using a first finite volume representation 201 corresponding to a first time step and a second finite volume representation 204 corresponding to a second time step. For example, as shown in FIG. 6, the meshes 212, 214, and 220 are translated by expanding each of the mesh cells 230 (and consequently each of the mesh cells 234) and the mesh cell 220. For example, each of the mesh cells 230 includes an axial dimension 231 that has a first value at the first time step (depicted by representation 201) and a second, larger, value at the second time step (depicted by representation 204). The expansion of the axial dimensions 231 of the mesh cells 230 simulates a translation characterized by an overall expansion 260 of the sub-domains in a direction along the axis 210, representing an increase in the depth of the simulated borehole. In some embodiments, some of the mesh cells 230 are expanded, while others are not expanded. In some embodiments, a mesh cell can be expanded or contracted by changing its axial dimension. In other embodiments, a mesh cell can be expanded or contracted by changing its radial dimension.

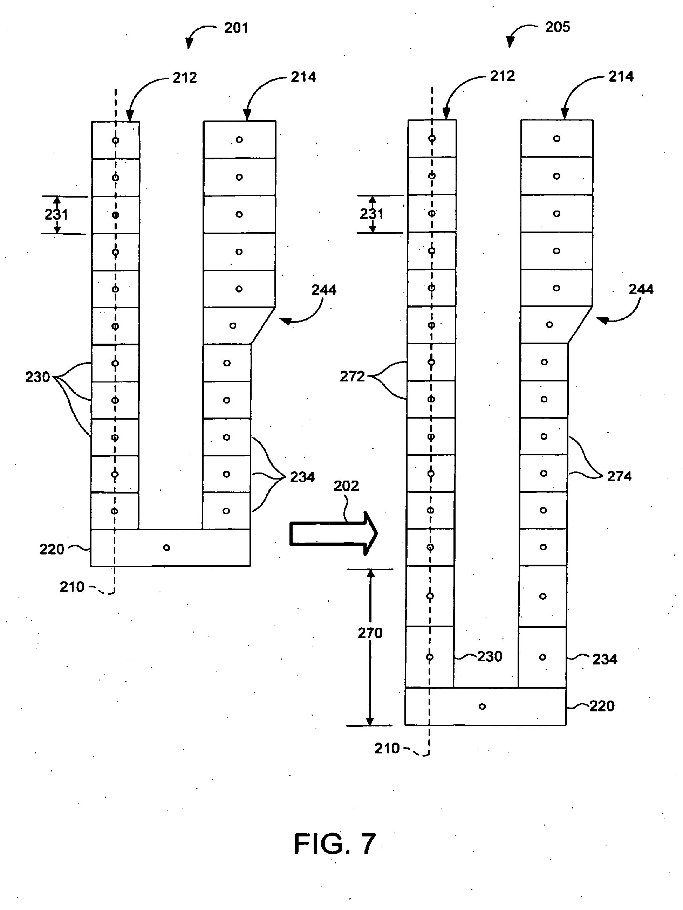

In various embodiments, a mesh can be translated by adding or removing one or more mesh cells and expanding or contracting one or more of the existing mesh cells. For example, in some embodiments, a mesh may be translated, according to a positive ROP, by adding mesh cells to a portion of the mesh corresponding to a shallower part of the borehole, while expanding mesh cells that are located near a portion of the mesh corresponding to regions near the bottom of the borehole. For example, as shown in FIG. 7, the transition 202 is simulated using a first finite volume representation 201 corresponding to a first time step and a second finite volume representation 205 corresponding to a second time step. The meshes 212, 214, and 220 are translated by expanding some of the mesh cells 230 and 234 and adding other mesh cells 272 and 274. The combination of addition of the mesh cells 272 and 274 and expansion of the mesh cells 230 and 234 simulates a translation characterized by an overall expansion 270 of the sub-domains in a direction along the axis 210, representing an increase in the depth of the simulated borehole.

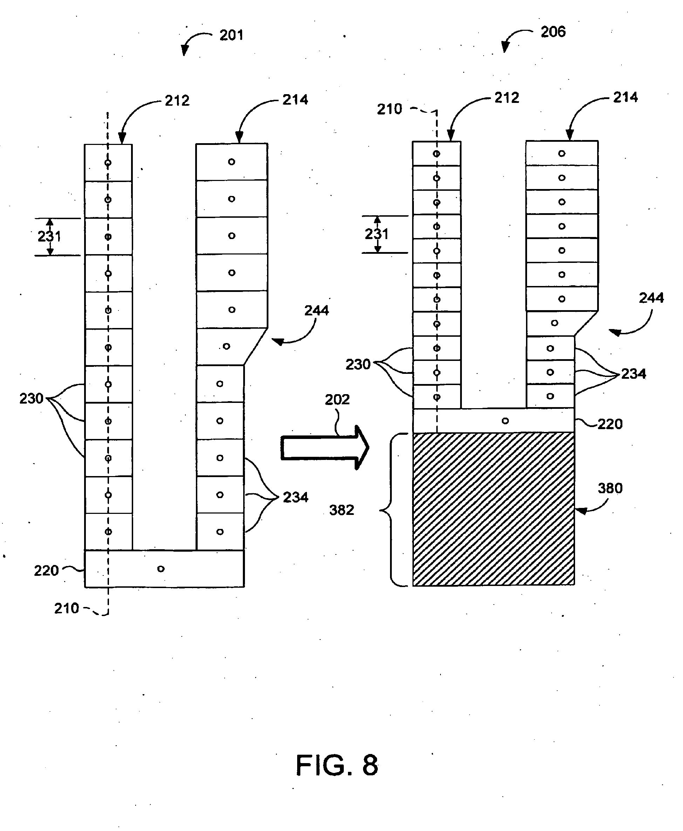

According to various embodiments, during a tripping-out operation, as the simulated drill string recedes from the bottom of the borehole, it leaves a space that may contain a volume 380 of downhole fluid, as shown in FIG. 8. In some embodiments, a new sub-domain 382 can be defined to correspond to this volume 380 of downhole fluid. In FIG. 8, the transition 202 is simulated using a first finite volume representation 201 corresponding to a first time step and a second finite volume representation 206 corresponding to a second time step. The meshes 212, 214, and 220 are translated by contracting the mesh cells 220, 230, and 234. In some embodiments, the meshes could be translated by removing mesh cells or removing some mesh cells and contracting some other mesh cells.

According to various embodiments, tripping-out operations can be simulated by specifying a negative ROP. In some embodiments, one or more additional mesh cells 382 can be generated ahead of the drill bit where there is stagnant fluid. In some embodiments, these additional mesh cells 382 can represent an additional sub-domain, while, in other embodiments, these additional mesh cells 382 can represent an expansion of an existing sub-domain. According to various embodiments, the conduction in the stagnant fluid may be modeled using a monolithic approach where the fluid and solids are meshed. Initial temperature conditions for the new mesh cells 382 can be taken from the drill-string values at the previous time step. When the ROP becomes positive again, corresponding to a next operation, the mesh cells corresponding to lower portions of the drill string that are in a new position corresponding to the stagnant fluid cells can take their initial conditions from the stagnant fluid cells that they pass. In some embodiments, as a stagnant fluid cell is passed by the descending drill string, conduction calculations in this cell may be stopped if the temperature transport calculation is resumed at that position. In some embodiments, during a tripping-out operation (with negative ROP), at least one new stagnant fluid cell 382 may be generated at each time step.

In some embodiments, during a tripping-out operation, the flow of drilling fluid may be halted, in which case the downhole fluid 380 below the drill bit may be relatively stagnant and, therefore, may, in some cases, be modeled using a steady-state solution and/or conduction equations. In other embodiments, during the tripping-out operation, the drilling fluid may still be pumped into the borehole, in which case the downhole fluid sub-domains can be modeled with advection equations in conjunction with expanded meshes, additional meshes, or combinations thereof.

According to various embodiments, for a translation operation, the fluid mesh cells below the riser (not shown) and above the reamer (not shown) can elongate. In some embodiments, as shown in FIGS. 5-7, the positions 244 of changes in diameters of the well are preserved as shown during translation. Additionally, during a typical drilling process, the drill string is lengthened by adding drill-string segments to the drill string. To facilitate opening of the borehole, the drill-string segments can vary in diameter (e.g., gradually getting wider). In some embodiments, these drill-string diameter transitions also may be translated according to a selected ROP. According to various embodiments, predicted temperature distributions from the first time step can be spatially translated to the second time step, facilitating interpolation of initial values for the second time step to the new mesh cell center positions. According to various embodiments, this process can occur over any number of time steps (e.g., time-based iterations).

In those embodiments in which the meshes are expanded, the predicted formation temperature distributions at the second time step may be spatially interpolated from the predicted formation temperature distributions of the first time step. In some embodiments, this interpolation can be a linear interpolation. Additionally, in some embodiments, the finite volumes at the bottom of the drill string that are in a position adjacent undisturbed formation, as well as the initial temperature conditions associated with the new formation, can be modeled using a uniform temperature at the far-field value. In other embodiments, these temperatures can be estimated using other iterative techniques such as linear interpolation, or the like.

Some embodiments of the disclosed subject matter are described in the general context of computer-executable instructions. Computer-executable instructions can include, for example, computer code, machine-useable instructions, and the like such as, for example, program components, capable of being executed by one or more processors associated with a computing device. Generally, program components including routines, programs, objects, modules, data structures, and the like, refer to code that, when executed, causes a computing device to perform particular tasks (e.g., methods, calculations, etc.) or implement or manipulate various abstract data types.

Computer-readable media can include both volatile and non-volatile media, removable and nonremovable media, and contemplate media readable by a database, a processor, a router, and various other networked devices. By way of example, and not limitation, computer-readable media can include media implemented in any method or technology for storing information. Examples of stored information include computer-executable instructions, data structures, program modules, and other data representations. Media examples include, but are not limited to, Random Access Memory (RAM); Read Only Memory (ROM); Electronically Erasable Programmable Read Only Memory (EEPROM); flash memory or other memory technologies; Compact Disc Read-Only Memory (CD-ROM), digital versatile disks (DVDs) or other optical or holographic media; magnetic cassettes, magnetic tape, magnetic disk storage or other magnetic storage devices; or any other medium that can be used to encode information and can be accessed by a computing device such as, for example, quantum state memory, and the like.

Embodiments may be practiced in a variety of system configurations, including handheld devices, general-purpose computers, specialty computing devices, servers, workstations, etc. Embodiments may also be practiced in distributed computing environments where tasks are performed by a number of computing devices that are linked through a communications network.

FIG. 9 illustrates an operating environment 400 suitable for implementing various embodiments of the technologies described herein. The operating environment 400 shown in FIG. 9 is not intended to suggest any limitation as to the scope of use or functionality of embodiments of the subject matter disclosed throughout this document. Neither should the operating environment 400 be interpreted as having any dependency or requirement related to any single component or combination of components illustrated therein. For example, in some embodiments, the operating environment 400 can include additional components such as, for example, wireless radios, seismic communication devices, and other communication components. Additionally, any one or more of the components depicted in FIG. 9 can be, in various embodiments, integrated with any one or more of the other components depicted herein (or components not illustrated). Any number of other components or combinations of components can be integrated with the operating environment 400 depicted in FIG. 9, all of which are considered to be within the ambit of the disclosed subject matter.

As illustrated in FIG. 9, the operating environment 400 includes a computing device 410 that is communicatively coupled to a well-site operating environment 412. According to various embodiments, the computing device 410 can include any type of computing device suitable for implementing embodiments of the subject matter disclosed herein. Examples of computing devices include "workstations," "servers," "laptops," "desktops," "tablet computers," "hand-held devices," and the like, all of which are contemplated within the scope of FIG. 9 and reference to a "computing device." In some embodiments, the computing device 410 can include more than one computing device such as, for example, in a distributing computing environment, a networked environment, and the like.

The computing device 410 includes a bus 414 that, directly and/or indirectly, couples the following devices: a processor 416, a memory 418, an input/output (I/O) port 420, an I/O component 422, and a power supply 424. Any number of additional components, different components, and/or combinations of components can also be included in the computing device 410. The bus 414 represents what may be one or more busses (such as, for example, an address bus, data bus, or combination thereof). Similarly, in some embodiments, the computing device 410 can include a number of processors 416, a number of memory components 418, a number of I/O ports 420, a number of I/O components 422, and/or a number of power supplies 424. Additionally any number of these components or combinations thereof can be distributed and/or duplicated across a number of computing devices. In other embodiments, the computing device 410 may only include two or three of the components illustrated in FIG. 9 such as, for example, a processor 416, a memory 418, or the like.

Although the various components of FIG. 9 are shown with lines for the sake of clarity, in reality, delineating various components of a computing device 410 may not be as clear, and metaphorically, the lines probably would be gray and fuzzy. For example, I/O components 422 can include devices contained within the computing device 410 and/or devices that are separate from the computing device 410. As another example, processors 416 have memory. As such, the diagram of FIG. 9 is merely illustrative of an example of a computing device 410 that can be used in connection with one or more embodiments, but any number of other configurations for a computing device 410 that can execute computer-executable instructions to accomplish various aspects of the embodiments described herein are also considered to be within the ambit of the disclosed subject matter.

According to various embodiments, the processor 416 (or processors) reads data from various entities such as the memory 418, I/O components 422, or the well-site operating environment 412. For example, in some embodiments, the processor 416 can execute computer-executable instructions 426 that are stored in the memory 418. Additionally, in some embodiments, the processor 416 can read data from the well-site operating environment 412 such as, for example, well data such as temperatures, pressures, formation properties, fluid properties, and the like. In some embodiments, these types of well data can be used as input parameters 428, which can be stored in the memory 418 and accessed by the processor 416 during calculations of predicted temperature distributions. Additionally, the processor 416 can receive computer-executable instructions, signals, or other types of data from the well-site operating environment 412. As the processor 416 reads and manipulates data, it can also cause data to be stored in the memory 418. For example, in some embodiments, the processor 416 can store predicted temperature distributions 430 in the memory 418 which can be presented to a user via the I/O component 422 such as, for example, a presentation component (e.g., a display, a printing device, a touch-screen I/O display, etc.), accessed by the processor 416 to be used to determine initial conditions for a next time-based iteration, communicated to the well-site operating environment 412, and the like.

The memory 418 may include computer-storage media in the form of volatile and/or .nonvolatile memory. The memory 418 may be removable, nonremovable, or a combination thereof. Examples of hardware memory devices include solid-state memory, hard drives, optical-disc drives, and the like. As shown in FIG. 9, the memory 418 stores computer-executable instructions 426 (e.g., a drilling simulation application) for causing the processor 416 to perform various aspects of embodiments of the methods discussed herein. The memory 418 can store one or more operating histories 432 associated with a drilling scenario simulation. In embodiments, an operating history 432 can include parameter values, result outputs, and the like. In some embodiments, for example, an operating history 432 is created by storing information corresponding to each time step of a simulation in a row of a database. In other embodiments, each row includes information associated with a save point, which can be defined to correspond to each time step, a range of time-steps, or the like. In some embodiments, a user can specify the definition of save points, thereby configuring the structure of the operating history 432.

In embodiments, the memory 418 can store an operating history imported from another application (e.g., to import data exported from a real-time application). The imported data may be segmented into portions of constant operating conditions. In embodiments, each segment of imported data can be stored in a row of a current operating history 432. Additionally, in some embodiments, when importing data, the computing device 412 can truncate the operating history 432 by discarding data that is sufficiently distanced from the imported data such that it has a negligible effect on predicting temperature distributions. In embodiments, the range of data to maintain in the operating history 432 can be determined automatically (e.g., based on the timescale for the temperature diffusion within the formation).

The memory 418 can also store parameters 428 that can be used, by the processor 416, as input parameters for performing various aspects of embodiments of the methods discussed herein. Parameters 428 can include any type of data and can be received by the computing device 410 from any number of different sources and/or combinations of sources such as, for example, the well-site operating environment 412; a user who inputs parameters via a user interface provided by the I/O component 422; a system or device not illustrated in FIG. 9 such as the Internet, wireless communication modules, or the like. According to embodiments, parameters 428 can include parameters associated with selected output options for presenting results of the analysis to a user, parameters associated with various properties that can be incorporated into the analysis, and the like.

In embodiments, parameters associated with selected output options for presenting results of the analysis to a user can include sets of selected outputs; options for presenting outputs (e.g., configurations for data sets, graphs, charts, etc.); selected frequencies of save points (i.e., a value indicating when and/or how often predicted temperature distributions and related information should be saved during the analysis); selections of additional drilling scenarios (e.g., alternative scenarios that can be analyzed in parallel with the primary drilling scenario); options for exporting data; and the like. In embodiments, parameters associated with various properties that can be incorporated into the analysis can include initial conditions (e.g., initial undisturbed formation temperature, initial drilling-fluid temperature, drilling-fluid properties, properties associated with various portions and tools of the drill string, results of steady-state analyses, predicted temperature distributions saved at selected save points, steady-state circulating temperatures, initial drill-bit depth, Nusselt number correlations, etc.); operating conditions (e.g., flow rate of downhole fluid, final drill-bit depth, operation definitions, etc.); parameters associated with sensitivity analyses (e.g., analyses regarding the sensitivity of the predicted temperature distributions to various inputs such as, for example, drilling-fluid flow rate, drill-bit revolutions-per-minute (RPM), drilling-fluid weight, ROP, circulating time, geothermal gradients, drilling-fluid cooling temperatures, etc.); predetermined thresholds (e.g., for triggering warnings); and the like.

In some embodiments, the I/O port 420 may allow a computing device to be logically coupled to other devices including devices associated with the well-site operating environment 412 and I/O components 422, some of which may be built in. Examples of I/O components 424 include a microphone, joystick, game pad, satellite dish, scanner, printer, wireless device, keyboard, pen, voice-input device, touch-input device, touch-screen device, interactive display device, a mouse, and the like. I/O components 422 can also include presentation components that present data indications to a user or other device. Examples of presentation components include a display device, speaker, printing component, vibrating component, indicator light, and the like.

As shown in FIG. 9, the computing device 410 can be communicatively coupled with the well-site operating environment 412. According to various embodiments, the well-site operating environment 412 can include a control system 440 and a sensing system 442. According to various embodiments, the control system 440 can include any type of control device that can be used, for example, to control various tools associated with a drill string, the drill string itself, and the like. For example, the control system 440 can, in some embodiments, include a roto-steerable system, a motor-controlling device, devices that control pumps, and the like. According to various embodiments, the sensing system 442 can include any number of different types of tools and/or devices that can be used to gather information about a well-site. For instance, in some embodiments, the sensing system 442 can include LWD modules, MWD modules, sensing devices located in a surface-drilling fluid reservoir, and the like. In embodiments, any number of components of the control system 440 and/or the sensing system 442 can be associated with a drill string (e.g., attached to the drill string, disposed within the drill string, communicatively coupled with the drill string, etc.) and/or associated with a surface system (e.g., located on the surface, communicatively coupled to a surface component, etc.). In embodiments, communication couplings can include wired communication technologies, wireless communication technologies, seismic communication technologies, and the like.

The well-site operating environment 412 can include any number of components not illustrated herein as well as any number of different combinations of components. Furthermore, any number of components of the well-site operating environment 412 can be located at the well-site or at a location that is remote from the well-site. Similarly, the computing device 410 can be located at the well-site or at a remote location. In some embodiments, the computing device 410 can be part of the well-site operating environment 412. For example, in some embodiments, a downhole assembly of a drill string can include a computing device 410 that interacts with LWD modules, MWD modules, and various control modules such as, for example, roto-steerable system and motor. In other embodiments, the computing device 410 may communicate with such modules from a location outside of the drill string.

For example, in an embodiment, the computing device 410 calculates predicted temperature distributions associated with a drilling scenario that simulates a real-time drilling process. Resulting calculations can be used, in embodiments, to adjust the real-time drilling process. In embodiments, the drilling scenario includes parameter values that correspond to real-time data collected by one or more tools in a bottom-hole assembly associated with the drill string (e.g., an LWD module, an MWD module, etc.). Also, according to various embodiments, the real-time data can be segmented into portions of constant operating conditions (e.g., operation, flow rate, ROP, etc.) before the calculations are performed. The real-time data can include any number of different types of parameter values associated with the drilling process such as, for example, measurements of downhole fluid flow rate, drill-bit revolutions-per-minute (RPM), and the like.

According to various embodiments, the computing device 410 can receive information from the well-site operating environment 412 and use that information to predict temperature distributions associated with various components of the well-site. In some embodiments, the computing device 410 can communicate with the control system 440 to facilitate controlling various operations of a well-site system. In some embodiments, for example, components of the well-site system can be controlled based on predicted temperature distributions of a downhole environment.

According to various embodiments, processing time can be improved to facilitate real-time implementations, capacity for additional simultaneous predictions, and the like. In some embodiments, any number of different techniques for improving processing time can be employed, including utilizing distributed processing environments, utilizing various types of assumptions, storing limited amounts of data, simplifying calculations, and the like.

For example, some embodiments include storing a predicted temperature distribution associated with the simulated formation when a difference between a temperature of the predicted temperature distribution and an undisturbed formation temperature satisfies a selected criterion (or criteria). According to various embodiments, the selected criterion can be satisfied when the temperature difference is greater than a predetermined threshold. In other embodiments, the selected criterion can be satisfied when the temperature difference is greater than a fixed proportion of a maximum difference between the temperature and the undisturbed formation temperature at a selected depth. Additionally, in embodiments, the stored predicted temperature distribution can be extrapolated beyond a region associated with the storing operation to determine a predicted temperature distribution at a following time step.

In some embodiments, simplifying calculations can be achieved by defining one or more models in terms of (e.g., as functions of) other models. For example, in an embodiment, models corresponding to formation sub-domains can be defined as functions of annular bulk fluid temperature (e.g., models corresponding to the annulus sub-domain). For the formation sub-domain, a boundary condition at the borehole (i.e., surface of the formation) can be that the heat flow to the downhole fluid equals the heat flow from the formation. Thus, in this embodiment, the boundary condition for the formation at the borehole can be a temperature gradient condition. In some embodiments, at the formation outer (far-field) radius, the boundary condition can be the far-field temperature value. In order to determine a predicted formation temperature distribution as a function of annular bulk fluid temperature, an iterative approach can be adopted in which the temperature gradient in the formation at the borehole can be adjusted to respect the interface heat flux continuity.

Assuming a linearity of embodiments of the unsteady-state temperature modeling equation in the formation, the temperature at a point in the formation can be expressed as a linear function of the annular bulk fluid temperature, $T_o$. Anywhere in the formation (location indicated by index $j$), including the borehole, at the end of a time step, $t$, the temperature can be modeled by the following equation:

$$T'_j = A_j T'_o + B_j. \qquad Eq.(7)$$

In some embodiments, two independent solutions to the formation model can be used to determine all the coefficients $A_j$ and $B_j$.

In those embodiments in which the above relationship can be utilized, the source term of heat flow from the formation to the downhole fluid in the annulus can be expressed in terms of the annulus bulk fluid temperature. For example, the source term can be expressed as in the following equation:

$$\delta q_{fi} = h_{fi} \delta A_{fi}(T_{fi} - T_o) \rightarrow h_{fi} \delta A_{fi}(A_j T_o + B_j - T_o), \qquad Eq.(8)$$

where the index $j$ for the coefficients $A$ and $B$ refers to the borehole location, $h_{fi}$ is the heat transfer coefficient at the formation surface, $\delta A_{fi}$ is the elemental area of the inner surface of the formation (e.g., borehole), and $T_{fi}$ is the temperature at the formation surface. This source term represents a linear form of the unknown $T_o$ and, in some embodiments, can be included in the linear source term of a standard finite volume discretization.

In some embodiments, inner and outer boundary conditions for the drill-string can be gradient-type (with the predicted indeterminate temperature value being propagated from elsewhere in the calculation domain). In an embodiment, three independent solutions can be utilized to determine a drill-string temperature distribution modeling equation corresponding to an end of a time step, t. This equation can be expressed as follows:

$$T'_j = C_j T'_o + D'_j T'_l + E_j, \qquad Eq.(9)$$

were $T_o$ is the bulk temperature of the downhole fluid within the annulus, $T_l$ is the bulk temperature of the downhole fluid within the drill string, and the index $j$ for the coefficients $C$, $D$, and $E$ refers to the borehole location. Using the relationships described above, the modeling equations, Eq.(1) and Eq.(2), can be re-written, in some embodiments, taking into account the linear equations for the temperature distributions associated with the solids. For downhole fluid located within the drill-string, Eq.(1) can be rewritten as follows:

$$\int_{\delta V}\left(\frac{\partial \rho C_p T_l}{\partial t} + \frac{\partial \rho C_p U_l T_l}{\partial x}\right)dV = \delta q_{pi} + \delta q_i \qquad Eq.(1')$$

$$\delta q_{pi} \doteq h_{pi}\delta A_{pi}(T_{pl} - T_l) \rightarrow h_{pi}\delta A_{pi}(C_j T_o + D_j T_l + E_j - T_l),$$

where the index $j$ on the coefficients $C$, $D$, and $E$ refers to locations on the inside surface of the flow conduit within the drill string. In, Eq.(1'), $\delta A_{pi} = \delta x. \, 2\pi r_{pi}$ is the elemental area of the inner surface of the flow conduit within the drill string, $r_{pi}$ is the internal radius of the flow conduit, $x$ is the axial dimension, $\rho$ is the density of the downhole fluid within the drill string, $C_p$ is the specific heat capacity of the downhole fluid, $U_i$ is the axial velocity of the downhole fluid, and $h_{pi}$ is the heat transfer coefficient at the inner surface of the flow conduit within the drill string. Additionally, in Eq.(1), $\delta q_i$ is the local or distributed heat source in the downhole fluid located within the drill string, $\delta q_{pi}$ is the heat flux on the inside of the flow conduit (used as a temperature gradient condition), and $T_{pi}$ is the temperature at the inner surface of the flow conduit.

Similarly, Eq.(2) can be rewritten as follows:

$$\int_{\delta V}\left(\frac{\partial \rho C_p T_o}{\partial t} + \frac{\partial \rho C_p U_o T_o}{\partial x}\right)dV = \delta q_{po} + \delta q_{fi} + \delta q_o \qquad Eq.(2')$$

$$\delta q_{po} = h_{po}\delta A_{po}(T_{po} - T_o) \rightarrow h_{po}\delta A_{po}(C_j T_o + D_j T_l + E_j - T_i)$$

$$\delta q_{fi} = h_{fi}\delta A_{fi}(T_{fi} - T_o) \rightarrow h_{fi}\delta A_{fi}(A_j T_o + B_j - T_o),$$

where the index $j$ on the coefficients $C$, $D$ and $E$ refers to locations on the outside surface of the drill string, $\delta A_{po} = \delta x \cdot 2\pi r_{po}$ and $\delta A_{fi} = \delta x \cdot 2\pi r_{fi}$ are the elemental areas of the outer surface of the drill string and the surface of the formation (or riser), respectively, $r_{po}$ is the radius of the outer surface of the drill string, $r_{fi}$ is the radius of the inner surface of the formation (e.g., borehole radius), $x$ is the axial dimension, $\rho$ is the density of the downhole fluid, $C_p$ is the specific heat capacity of the downhole fluid, $U_o$ is the axial velocity of the downhole fluid in the annulus, and $h_{po}$ and $h_{fi}$ are the respective heat transfer coefficients at the outer surface of the drill string and the inner surface of the formation. Additionally, in Eq.(2'), $\delta q_o$ is the local or distributed heat source in the downhole fluid located within the annulus, $\delta q_{fi}$ is the heat flux on the formation surface (used as a temperature gradient condition), and $\delta q_{po}$ is the heat flux on the outside drill-string surface (also used as a temperature gradient condition).

In the context of these relationships, the source term for modeling temperature distributions corresponding to the downhole fluid located within the drill string can have a term with linear dependence on the temperature distribution corresponding to the downhole fluid within the annulus, and the source term for modeling temperature distributions corresponding to the downhole fluid within the annulus can have a term with linear dependence on the temperature distributions corresponding to the downhole fluid within the drill string.

According to some embodiments, the discretized equations for modeling the temperature distributions corresponding to the downhole fluids within the drill string and the annulus can be solved with a band or special-matrix solution algorithm. In other embodiments, the discretized equations can be solved utilizing sweeps of a tri-diagonal matrix algorithm with iterative update of the source terms accounting for drill-string fluid temperature dependence of the annulus fluid modeling equation and annulus fluid temperature dependence of the drill-string fluid modeling equation.

Additionally, in some embodiments, the iterative solution of the modeling equations corresponding to the formation, riser and drill string can account for the heat flux at the sub-domain interfaces by utilizing Newton's method. For example, in those embodiments having a simulated riser, there may be two interface temperatures for the drill string and riser and Newton's method can be applied with alternating calculations of each interface temperature until a convergence of both temperatures is achieved.

Additionally, according to various embodiments, processing time can be reduced by assuming that the thermal inertia of the drill string is significant. For example, the computation can include calculating a Fourier number corresponding to the drill string and comparing the Fourier number to a predetermined threshold. In those embodiments in which the drill string is relatively thick, the Fourier number may exceed the threshold, in which case, processing time can be reduced by utilizing local conditioning at each mesh cell corresponding to the drill string. In some embodiments, the Fourier number, Fo, can be expressed as follows:

$$F_o = \frac{kt}{\rho C_p L^2}, \qquad Eq.(10)$$

where $L$ is the characteristic length (e.g., the thickness of the wall of the drill string), k is the thermal conductivity of the drill string, $\rho$ is the density of the drill string, and $C_p$ is the specific heat capacity of the drill string.

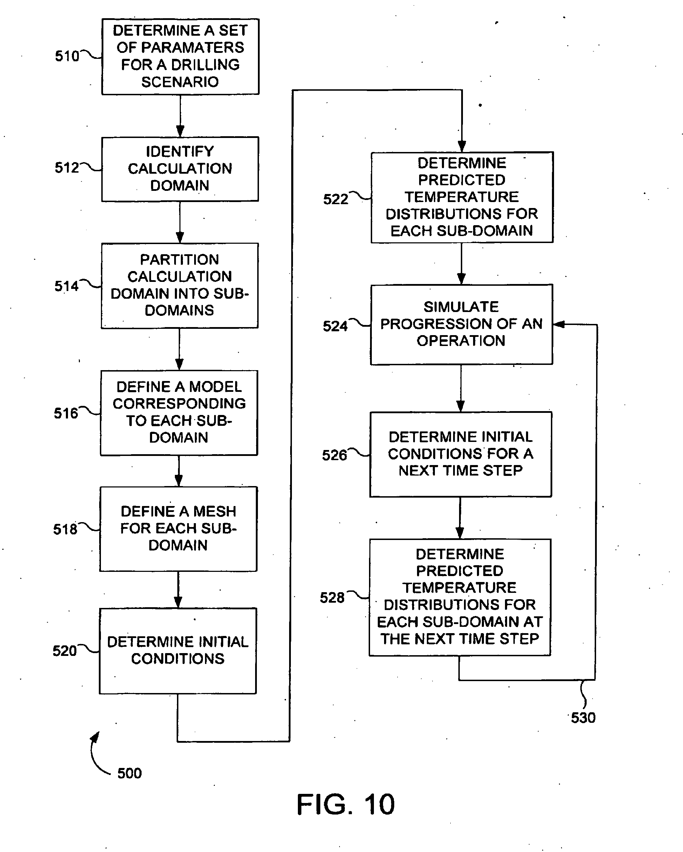

As discussed above, various embodiments of the disclosed subject matter include utilizing a computing device to perform methods of predicting temperature distributions corresponding to regions of a downhole environment. FIG. 10 is a flow diagram depicting a method 500 for predicting downhole temperatures in accordance with embodiments of the disclosed subject matter. Embodiments of the method 500 can be used, for example, to predict downhole temperatures of downhole fluid, formations, and/or drill strings. In some embodiments, for example, information about a formation may be known and used to predict temperature distributions of downhole fluid associated with a drilling scenario. In other embodiments, for example, information about downhole fluid may be known and used to predict temperature distributions of formations associated with a drilling scenario. In other embodiments, any number of other different properties of components of a well-site may be predicted based on the predicted temperature distributions attained through implementation of embodiments of the method 500.

As shown in FIG. 10, the method 500 includes determining a set of parameters for a drilling scenario (block 510) and identifying a calculation domain (block 512). According to various embodiments, the drilling scenario can simulate one or more operations, some of which may be translation operations. In some translation operations, a depth of a downhole end of a simulated drill string can change as the drilling scenario progresses. In some embodiments, the translation of the drill string can be modeled using a translation parameter that may change according to the change in the depth of the downhole end of the simulated drill string. In some embodiments, a transition between two operations can be simulated based on a temperature criterion. For example, in an embodiment, the temperature criterion can be determined by comparing a predicted temperature at a selected downhole location within the drill string with a predetermined value. Any number of other static and/or dynamic parameters can also be used to define the drilling scenario.

In some embodiments, the translation parameter can be constant for the entire drilling scenario, while in other embodiments, the translation parameter can be variable throughout the drilling scenario. For example, in some embodiments, the drilling scenario can include a number of operations, which can be simulated in series, parallel, or a combination thereof. In some operations, the translation parameter may have one value, while in other operations, the translation parameter may have several different values: In some embodiments, the translation parameter can be defined as a function that may depend upon a variable such as, for example, a variable associated with predicted temperature fields, a variable associated with time, a variable associated with simulated formation properties, or the like.

In various embodiments, the calculation domain can include the space and time domains within which calculations may be performed in the context of the method 500. That is, for example, the calculation domain can be characterized by a selected three-dimensional space that may include a simulated borehole, a certain amount of surrounding formation, a drill-string disposed within the borehole, a volume of downhole fluid, a riser, a volume of sea-water surrounding a riser and/or borehole, and the like. In some embodiments, the calculation domain may refer only to a spatial domain, which can include one, two, or three dimensions. In such embodiments, for example, the final depth of the simulated borehole may be predetermined and included within the calculation domain.

In other embodiments, the calculation domain can include a reference to a spatial region and an associated time domain. That is, for example, in some embodiments, the calculation domain may refer to a spatial region that may include a simulated borehole for which a final depth is not predetermined. In such cases, the calculation domain may also be defined to include a time dimension, for example, to account for a translation operation such that the spatial dimension of the calculation domain can expand as the translation operation progresses. In other embodiments, the final depth of the simulated drill string may be predetermined, but the spatial component of the calculation domain may be adjusted as the translation operation progresses through a time component of the calculation domain (as is depicted, for example, in FIGS. 3-8).

According to various embodiments, the calculation domain can include an abstract concept, a particular dimensional definition, one or more functions of time and/or space, or the like. Additionally, according to various embodiments, the calculation domain can be characterized using any number of different coordinate systems, matrices, vectors, or other characterization mechanisms. For instance, in some embodiments, the calculation domain can be defined with respect to a Cartesian coordinate system, a spherical coordinate system, a parabolic coordinate system, or the like. In some embodiments, the calculation domain can be represented by a set of boundary elements that may, for example, define the spatial boundaries within which the calculations can be performed. Any number of other ways of defining, representing, and/or using a calculation domain can be utilized in accordance with various implementations of embodiments of the method 500.

As shown in FIG. 10, the method 500 also includes partitioning the calculation domain into a number of sub-domains (block 514). In various embodiments, the calculation domain can be partitioned into any suitable number of sub-domains. For instance, in one embodiment, the calculation domain can be partitioned into two sub-domains: one sub-domain corresponding to downhole fluid and another sub-domain corresponding to downhole solids (e.g., formation, drill string, etc.). In another embodiment (as illustrated, for example, in FIGS. 3-8), the calculation domain can be partitioned into four or more sub-domains: a first downhole fluid sub-domain, a drill-string sub-domain, a second downhole fluid sub-domain, and a formation sub-domain. In some embodiments, additional sub-domains (e.g., stagnant fluid sub-domains used for tripping operations) can be defined at any time during the method 500. Additionally, in some embodiments, the calculation domain can be partitioned to include separate sub-domains corresponding to particular tools in the drill string, reamers, risers, sea-water, or any other component of the calculation domain. In some embodiments, various aspects of the method 500 can be performed using the entire calculation domain, in which case, partitioning the calculation domain may result in a single sub-domain: the calculation domain. According to various embodiments, the calculation domain can be partitioned according to predicted temperature distributions, properties, or any other parameters.

Embodiments of the method 500 further include defining a respective model corresponding to each sub-domain (block 516). As discussed above, a model can include any type of relationship or other mathematical construct that can be used for predicting downhole temperature distributions. For example, as described above, a set of partial-differential equations can be used to model temperature distributions associated with various components of the calculation domain (and, thus, sub-domains). According to various embodiments, a first modeling equation can be defined for predicting temperature distributions corresponding to a volume of downhole fluid located within the drill string as a function of a set of parameters. In embodiments, an additional modeling equation can be defined for predicting temperature distributions corresponding to a volume of downhole fluid located in the annulus. In other embodiments, a number of modeling equations can be defined for predicting temperature distributions corresponding to a number of different portions of a volume of downhole fluid.

In embodiments, the first modeling equation can be defined as a function of any number of different parameters including, for example, fluid density, rheological constants, fluid thermal conductivity, specific heat capacity, and the like. One or more parameters of the downhole fluid may vary as a function of any number of variables such as location, pressure, time, and the like. In some embodiments, parameters can be dynamically calculated throughout a drilling-scenario simulation. In some embodiments, parameters can be calculated at each time step of the simulation, while, in other embodiments, parameters can be calculated in response to a trigger. In embodiments, a trigger can include a change in temperature of the downhole fluid exceeding a predetermined threshold. According to various embodiments, parameters can be calculated at the same frequency that predicted temperature distributions are calculated, while, in other embodiments, parameters can be calculated at a slower frequency than the frequency of the temperature predictions.

In an embodiment, for example, the first modeling equation can correspond to a first transient global volume of a simulated downhole fluid. This first transient global volume can be, for example, located within the simulated drill string. In other embodiments, the first transient global volume of downhole fluid can refer to a stagnant global volume of the simulated downhole fluid or a combination of transient and stagnant downhole fluid. As the term "global volume" is used herein, a global volume refers to a volume with reference to which calculations can be performed. In some embodiments, for example, a global volume can refer to an entire volume of fluid included within a calculation domain, a portion of fluid included within a calculation domain, or the like. In an embodiment, the first global volume of fluid can include the entire volume of fluid that is represented by one or more defined meshes and the term "global volume" is used to distinguish from the volume represented by a mesh cell (which may be denoted as a "control volume").

According to various embodiments, a second modeling equation can be defined for predicting temperature distributions corresponding to a simulated formation. According to various embodiments, the second modeling equation can include any type of equations or system of equations suitable for predicting temperature distributions associated with the simulated formation. In an embodiment, for example, the second modeling equation can include a nonlinear, partial-differential equation that can represent temperature distributions as a function of various parameters including correlations between specific heat capacities, local heat fluxes, density of the formation, thermal conductivity of the formation, and any number of other parameters. In embodiments, one or more parameters associated with the simulated formation can vary as a function of location within the formation, time, or the like.

According to various embodiments, a third modeling equation can be defined for predicting temperature distributions corresponding to a volume of downhole fluid located within an annulus. According to various embodiments, the third modeling equation can include any type of equation or system of equations that, can be used for predicting temperature distributions associated with the downhole fluid in the annulus. In an embodiment, for example, the third modeling equation may correspond to a second transient global volume of the simulated downhole fluid. Additionally, according to embodiments of the method 500, a fourth modeling equation can be defined for predicting temperature fields associated with a simulated drill string as a function of a set of parameters (e.g., a density of the drill string, a thermal conductivity of the drill string, and a specific heat capacity of the drill string). In some embodiments, one or more of the parameters associated with the simulated drill string can vary as a function of a location on the drill string.

According to various embodiments, any number of additional models can be defined, as well. For example, in some embodiments, a riser model can be defined for predicting temperature distributions associated with a simulated riser. In some embodiments, the riser model can be defined to correspond to a riser that does not include a boost-line flow, while, in other embodiments, the riser model can account for a boost-line flow. In other embodiments, models can be defined for predicting temperature distributions associated with reamers, hole-openers, and the like. Additionally, in various embodiments, any one or more of the first, second, third, and fourth modeling equations discussed above can be defined to account for any number of different heat sources.

In various embodiments, a mesh can be defined for each sub-domain (block 518). According to some embodiments, the mesh defined for a sub-domain can be any type of mesh or combination of types of meshes. Each mesh includes one or more mesh cells. In some embodiments, each mesh cell can include an axial dimension, which is a dimension that corresponds to a direction in which the size of the mesh can be changed throughout a drilling scenario. In some embodiments, the mesh cells may include additional dimensions, as well, such as cross-sectional areas, radial dimensions, angular dimensions, and the like. Additionally, according to various embodiments, different types of meshes can be defined for different sub-domains.

As indicated at blocks 520 and 522 respectively, initial conditions can be determined for calculations at a first time step and predicted temperature distributions for each sub-domain can be determined. According to various embodiments, any number of different techniques such as, for example, monolithic calculation approaches, finite numerical solutions, and the like can be employed to determine predicted temperature distributions. According to embodiments of the method 500, determining predicted temperature distributions for each sub-domain can include discretizing the modeling equations and applying a numerical solution method with respect to each sub-domain. In various embodiments, any number of different types of numerical solution methods can be applied to determine predicted temperature distributions. Examples of such methods include, but are not limited to, finite difference methods, spectral element methods, finite volume methods, and the like.

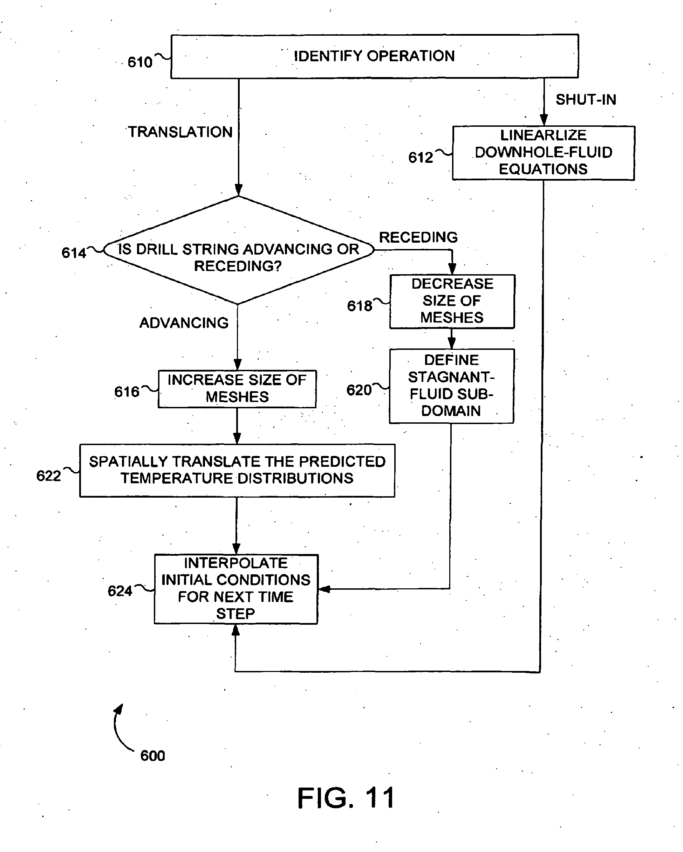

Embodiments of the method 500 include simulating progression of an operation between the previous time step and a next time step (block 524) (as explained further below with reference to FIG. 11) and determining initial conditions for the next time step (block 526). In some embodiments, initial conditions for the next time step can be interpolated using the predicted temperature distributions from the previous time step. Based on these interpolated initial conditions, predicted temperature distributions for each sub-domain can be calculated at the next time step (block 528). According to various embodiments, any number of additional time-based iterations (e.g., calculations at additional time steps) can be performed within the context of an operation and/or drilling scenario, as indicated by the loop 530. According to various embodiments, the method 500 may be terminated upon a determination of predicted temperature distributions corresponding to a final time step of interest (e.g., a time step corresponding to a final borehole depth).

In embodiments, one or more additional analyses corresponding to one or more additional drilling scenarios can be performed in parallel to embodiments of the method 500. For example, in some embodiments, parallel analyses can include an analysis corresponding to an effect of stopping circulation of drilling fluid, an analysis corresponding to different parameters, or the like. In embodiments, the predicted temperature distributions associated with the any number of parallel analyses can be presented simultaneously such as, for example, by plotting the parallel results on a graph where results from each parallel analysis can be plotted alongside one another.

In embodiments of the method 500, temperature distributions corresponding to the simulated formation can be predicted using a steady-state solution. In some embodiments, a penetration radius (e.g., a radius of the borehole that changes over time) corresponding to the steady-state solution of the formation can be modeled as a function of depth and/or time. For example, in an embodiment, this function can include a function of an amount of time that has passed since a drilling-fluid circulation operation began, a function of an amount of time that has passed since the downhole end of the drill string has advanced beyond a predetermined depth, or the like.

According to various implementations, predicted temperature distributions resulting from embodiments of the method 500 can be used to predict one or more thermal stresses within the formation. The predicted thermal stresses can be presented to a user. In embodiments, the predicted thermal stresses can be used to predict the stability of the borehole. For example, in embodiments, predicted temperature distributions can be used as inputs to a thermal stress calculation and the predicted stresses can be used as inputs to a borehole-stability model.

According to various embodiments, the method 500 can include simulating a staging strategy. In embodiments, a staging strategy can include a staging trigger, an action, and conditions for determining repetition of operations. Examples of staging triggers include a determination that a tool temperature exceeds a certain value, a determination of an occurrence of a fixed number of stands (additions of drill-string segments), and the like. In embodiments, upon detection of a staging trigger, selected operating conditions can be suspended and a period of stationary circulation can be started. The period of circulation can include a fixed duration or a conditional duration. For example, in an embodiment, a period of circulation can progress until a predicted temperature of a predicted temperature distribution has decreased to a certain value. Embodiments of the method 500 can include additional features such as, for example, sensitivity analyses, analyses incorporating dynamically changing parameters, and the like.

FIG. 11 is a flow diagram depicting a method 600 for simulating progress of an operation between the previous time step and a next time step in accordance with embodiments of the disclosed subject matter. Embodiments of the method 600 can be used to perform the simulation indicated, for example, at block 524 of the method 500 depicted in FIG. 10. In embodiments of the method 600, an operation can be identified (block 610). If the operation is a shut-in operation, the downhole-fluid equations can be linearized (block 612). In some embodiments, a drilling process can be temporarily halted and the flow of downhole fluid (e.g., drilling fluid/mud) temporarily halted such that the downhole fluid is relatively stagnant. In this case, modeling temperature distributions associated with the downhole fluid may be achieved with sufficient accuracy, in various embodiments, by using linear, partial-differential conduction equations.

In other embodiments, however, the downhole-fluid equations may not be linearized during a shut-in operation. For example, in some embodiments, a drill-string progression may be temporarily halted during a shut-in operation to allow for downhole cooling of various tools within the drill string. In this case, drilling fluid can continue to be circulated (e.g., pumped through the drill string, into the borehole), thereby cooling the undisturbed formation ahead of the drill bit as well as the downhole fluid surrounding the drill string. In this case, because the downhole fluid is being circulated, modeling temperature distributions associated therewith may be more accurately achieved, in some embodiments, using nonlinear, partial-differential advection equations. In various embodiments of shut-in operations, however, the drill string may not be translated and, therefore, there may be no need to translate the meshes corresponding to the calculation sub-domains.

In various embodiments, if the operation is a translation operation, a determination can be made as to whether the drill string is advancing (e.g., movement corresponding to a positive ROP) or receding (e.g., movement corresponding to a negative ROP) (block 614). If the translation corresponds to an advancing drill string (e.g., a drilling operation, a tripping-in operation, etc.), the meshes may be increased in size (block 616) and if the translation corresponds to a receding drill string (e.g., a tripping-out operation, a back-reaming operation, etc.), the downhole-fluid meshes and drill-string meshes may be increased in size (block 618) and a stagnant-fluid sub-domain (and, in some embodiments, a corresponding mesh) can be defined (block 620). Based on the modified meshes, the predicted temperature distributions can be spatially translated (block 622) and used to interpolate initial conditions for the next time-based iteration of embodiments of, e.g., the method 500 (block 624).

The present subject matter has been described in relation to particular embodiments, which are intended in all respects to be illustrative rather than restrictive. Alternative embodiments will become apparent to those of ordinary skill in the art to which the disclosed subject matter pertains without departing from its scope. For example, the methods, systems and techniques described herein are applicable to various situations/modes of implementation, e.g., planning modes, real-time modes, near-real-time modes and the like. It will be understood that certain features and subcombinations are of utility and may be employed without reference to other features and subcombinations. This is contemplated by and is within the scope of the claims.

**Claims**

1.  A method of predicting a temperature distribution for a downhole fluid during a drilling scenario, the method comprising:

    defining a first model for predicting a first temperature distribution associated with a volume of a simulated downhole fluid as a function of a first set of parameters;
    defining a second model for predicting a temperature distribution of a simulated formation as a function of a second set of parameters;
    defining a drilling scenario that simulates an operation in which a depth of a downhole end of a simulated drill string changes as the drilling scenario progresses; and
    determining a first set of predicted temperature distributions predicted based on the first model and the second model, the first set of predicted temperature distributions representing temperature distributions of the volume of the simulated downhole fluid as the drilling scenario progresses.

2. The method of claim 1, further comprising:

identifying a calculation domain associated with the drilling scenario; and
partitioning the calculation domain into a plurality of sub-domains, the plurality of sub-domains comprising a first downhole-fluid sub-domain, a drill-string sub-domain, a second downhole-fluid sub-domain, and a formation sub-domain.

3. The method of claim 2, wherein determining the first set of predicted temperature distributions includes applying a numerical solution method with respect to the first downhole-fluid sub-domain, the numerical solution method comprising:

defining a mesh corresponding to the first downhole-fluid sub-domain, the mesh having a plurality of mesh cells, each of the plurality of mesh cells comprising an axial dimension;
determining a first one of the first set of predicted temperature distributions at a first time step, the first predicted temperature distribution including a plurality of first predicted temperatures, each of the plurality of first predicted temperatures corresponding to one of the plurality of mesh cells;
translating the simulated drill string during the operation according to a selected rate of penetration, translating the simulated drill string comprising:

(1) advancing the simulated drill string if the selected rate of penetration is positive, wherein advancing the simulated drill string includes increasing the size of the first downhole-fluid sub-domain; and/or
(2) receding the simulated drill string if the selected rate of penetration is negative, wherein receding the simulated drill string includes decreasing the size of the first downhole-fluid sub-domain and defining a stagnant-fluid sub-domain corresponding to a volume of downhole fluid located below the receding simulated drill string, wherein the plurality of mesh cells includes one or more mesh cells associated with the stagnant fluid sub-domain; and

spatially translating the plurality of first predicted temperatures and using the spatially-translated plurality of first predicted temperatures to interpolate initial values corresponding to each of the plurality of mesh cells at a second time step; and
determining a second one of the first set of predicted temperature distributions at the second time step.

4. The method of any of claims 1-3, wherein the first temperature distribution corresponds to a first transient global volume of the simulated downhole fluid, wherein the first transient global volume is located within the simulated drill string, the method further comprising:

defining a third model for predicting a second temperature distribution associated with the volume of the simulated downhole fluid as a function of a third set of parameters, wherein the second temperature distribution corresponds to a second transient global volume of the simulated downhole fluid, and wherein the second transient global volume is located within an annular region defined between an outside surface of the simulated drill string and a surface of the simulated formation; and
defining a fourth model for predicting a temperature distribution associated with the simulated drill string as a function of a fourth set of parameters.

5. The method of claim 4, wherein the temperature distribution associated with the simulated drill string is predicted using a steady-state solution.

6. The method of claim 4, wherein one or more parameters of the fourth set of parameters varies as a function of a location on the simulated drill string, the one or more parameters of the fourth set of parameters including at least one of a density of the simulated drill string, a thermal conductivity of the simulated drill string, and a specific heat capacity of the simulated drill string.

7. The method of claim 3 or 4, wherein one or more parameters of the third set of parameters varies as a function of a location in the simulated formation, the one or more parameters of the third set of parameters including at least one of a density of the simulated formation, a thermal conductivity of the simulated formation and a specific heat capacity of the simulated formation.

8. The method of any of claims 1-7, further comprising calculating one or more parameters of the first set of parameters in response to determining that a predicted temperature distribution of the first set of predicted temperature distributions exceeds a predetermined threshold, wherein the one or more parameters of the first set of parameters varies as a function of at least one of a location in the borehole, a composition of the downhole fluid, and time, wherein the one or more parameters of the first set of parameters includes at least one of a density of the simulated downhole fluid, a rheological constant associated with the simulated downhole fluid, a thermal conductivity of the simulated downhole fluid, and a specific heat capacity of the simulated downhole fluid, wherein at least one of the one or more parameters of the first set of parameters is a function of pressure and temperature and/or is calculated at a slower frequency than a frequency associated with the determining of the first set of predicted temperature distributions.

9. The method of any of claims 1-5, wherein the second model includes a linear, partial-differential modeling equation.

10. The method of any of claims 1-6, wherein a penetration radius corresponding to a steady-state solution associated with the simulated formation is a function of at least one of depth and time, said function including at least one of a function of an amount of time that has passed since a drilling-fluid circulation operation began and a function of an amount of time that has passed since a downhole end of the drill string has advanced beyond a predetermined depth.

11. The method of claim 3, further comprising performing a plurality of time-based iterations of the numerical solution method, the plurality of iterations corresponding to the translation of the simulated drill string.

12. The method of claim 3 or 11, wherein advancing the simulated drill string includes:

adding at least one mesh cell to the plurality of mesh cells if the selected rate of penetration is positive; and/or removing at least one mesh cell from the plurality of mesh cells if the selected rate of penetration is negative.

13. The method of any of claims 3, 11 and 12, wherein translating the simulated drill string includes:

expanding the axial dimension of one or more of the plurality of mesh cells if the selected rate of penetration is positive; and/or contracting the axial dimension of one or more of the plurality of mesh cells if the selected rate of penetration is negative.

14. The method of any of claims 3 and 11-13, further comprising determining a third one of the first set of predicted temperature distributions at a third time step, wherein the operation includes a shut-in operation between the second and third time steps, and wherein, at the third time step, the first model includes a linear, partial-differential modeling equation.

15. The method of any of claims 3 and 11-14, wherein the numerical solution method includes at least one method selected from a group comprising a finite difference method, a finite element method, a finite volume method, and a spectral element method.

16. A method of predicting a temperature of a downhole fluid within a borehole, the method comprising:

identifying a calculation domain associated with a drilling scenario;
partitioning the calculation domain into a plurality of sub-domains, the plurality of sub-domains comprising a first downhole-fluid sub-domain, a drill-string sub-domain, a second downhole-fluid sub-domain, and a formation sub-domain;
defining a plurality of models, each of the plurality of models corresponding to one of the plurality of sub-domains, wherein the plurality of models respectively predict temperature distributions associated with the plurality of sub-domains as a function of a set of parameters;
defining a first mesh corresponding to the first downhole-fluid sub-domain, wherein the first mesh includes a plurality of mesh cells;
defining a drilling scenario that simulates an operation in which a depth of a downhole end of a simulated drill string changes as the drilling scenario progresses, the drilling scenario including a selected translation parameter that changes according to the change in the depth of the downhole end of the simulated drill string;
determining a first predicted temperature distribution at a first time step based on a first estimated solution of the plurality of models, the first predicted temperature distribution modeling a first temperature distribution associated with the first downhole-fluid sub-domain, wherein the selected translation parameter has a first value at the first time step; and

determining a second predicted temperature distribution at a second time step based on a second estimated solution of the plurality of models, the second predicted temperature distribution modeling a second temperature distribution associated with the first downhole-fluid sub-domain, wherein the selected translation parameter has a second, and different, value at the second time step and, wherein, at the second time step, the first mesh is modified based on a difference between the second value of the translation parameter and the first value of the translation parameter.

17. The method of claim 16, wherein each of the plurality of mesh cells includes an axial dimension, and wherein the axial dimension of one or more of the plurality of mesh cells has a first value at the first time step and a second, and different, value at the second time step.

18. The method of claim 16 or 17, further comprising:

adding at least one mesh cell to the plurality of mesh cells if the difference between the second value of the translation parameter and the first value of the translation parameter is positive; and/or removing at least one mesh cell from the plurality of mesh cells if the difference between the second value of the translation parameter and the first value of the translation parameter is negative.

19. The method of any of claims 16-18, further comprising:

defining a second mesh corresponding to the formation sub-domain;
determining a third predicted temperature distribution at the first time step based on the first estimated solution of the plurality of models, wherein the third predicted temperature distribution models a first temperature distribution associated with the formation sub-domain; and
determining a fourth predicted temperature distribution at the second time step based on the second estimated solution of the plurality of models, wherein the fourth predicted temperature distribution models a second temperature distribution associated with the formation sub-domain, wherein the model corresponding to the formation sub-domain includes a linear, partial-differential equation..

20. The method of any of claims 16-19, wherein the translation parameter changes according to a selected rate of penetration.

21. The method of any of claims 16-20, the plurality of models comprising:

a first transient-advection equation corresponding to the first downhole-fluid sub-domain;
a second transient-advection equation corresponding to the second downhole-fluid sub-domain;
a first transient-conduction equation corresponding to the formation sub-domain; and
a second transient-conduction equation corresponding to the drill-string sub-domain.

22. The method of any of claims 16-21, wherein determining the first and third predicted temperature distributions comprises applying a numerical solution method to determine the first estimated solution to the plurality of models, wherein performing the numerical solution method comprises aggregating iterations of the numerical solution method for each of the plurality of sub-domains.

23. The method of any of claims 16-22, wherein at least one predicted temperature distribution is used to predict one or more thermal stresses within the simulated formation, wherein the one or more thermal stresses are used to predict a stability of the borehole.

24. The method of any of claims 16-23, further comprising performing one or more additional analyses corresponding to one or more additional drilling scenarios, wherein the one or more additional analyses are performed in parallel to a primary analysis corresponding to the drilling scenario, wherein the one or more additional analyses includes an analysis corresponding to an effect of stopping circulation of drilling fluid, wherein predicted temperature distributions associated with the one or more additional analyses are plotted on a graph alongside the primary analysis corresponding to the drilling scenario.

25. The method of any of claims 16-24, wherein a transition between two operations is simulated based on a temperature criterion, wherein the temperature criterion is determined by comparing one or more predicted temperatures of a predicted temperature distribution at a selected downhole location within the drill string with one or more predetermined values.

26. The method of any of claims 16-25, further comprising storing a predicted temperature distribution associated with the simulated formation when a difference between a temperature of the predicted temperature distribution and an undisturbed formation temperature satisfies a selected criterion, wherein the selected criterion,is satisfied either when the temperature difference is greater than a predetermined threshold or when the temperature difference is greater than a fixed proportion of a maximum difference between the temperature and the undisturbed formation temperature at a selected depth, wherein the stored predicted temperature distribution is extrapolated beyond a region associated with the stored predicted temperature distribution, and wherein the extrapolated temperature distribution is used to compute a predicted temperature distribution at a following time step.

27. A system for drilling a well that includes a computing device comprising a processor for performing a method according to any of preceding claims, wherein said system includes at least one of a logging-while-drilling (LWD) module and a measurement-while-drilling (MWD) module.

28. The method of claim 27, wherein a drilling scenario simulates a real-time drilling process having associated parameter values that correspond to real-time data collected by at least one of the LWD module and the MWD module, wherein the real-time data is segmented into portions of constant operating conditions before a calculation of a predicted temperature distribution is performed.

**Patentansprüche**

1. Verfahren zum Vorhersagen einer Temperaturverteilung für ein Bohrlochfluid während eines Bohrszenarios, wobei das Verfahren Folgendes umfasst:

Definieren eines ersten Modells zum Vorhersagen einer ersten Temperaturverteilung, die einem Volumen eines simulierten Bohrlochfluids zugeordnet ist, als eine Funktion einer ersten Gruppe von Parametern;
Definieren eines zweiten Modells zum Vorhersagen einer Temperatur-verteilung einer simulierten Formation als eine Funktion einer zweiten Gruppe von Parametern;
Definieren eines Bohrszenarios, das eine Operation simuliert, in der sich eine Tiefe eines Bohrlochendes eines simulierten Bohrstrangs mit fortschreitendem Bohrszenario ändert; und
Bestimmen einer ersten Gruppe vorhergesagter Temperaturverteilungen, die anhand des ersten Modells und des zweiten Modells vorhergesagt werden, wobei die erste Gruppe vorhergesagter Temperaturverteilungen Temperaturverteilungen des Volumens des simulierten Bohrlochfluids mit fortschreitendem Bohrszenario repräsentiert.

2. Verfahren nach Anspruch 1, das ferner umfasst:

Identifizieren eines Rechenbereichs, der dem Bohrszenario zugeordnet ist; und
Partitionieren des Rechenbereichs in mehrere Unterbereiche, wobei die mehreren Unterbereiche einen ersten Bohrlochfluid-Unterbereich, einen Bohrstrang-Unterbereich, einen zweiten Bohrlochfluid-Unterbereich und einen Formationsunterbereich umfassen.

3. Verfahren nach Anspruch 2, wobei das Bestimmen der ersten Gruppe vorhergesagter Temperaturverteilungen das Anwenden eines numerischen Lösungsverfahrens in Bezug auf den ersten Bohrlochfluid-Unterbereich umfasst, wobei das numerische Lösungsverfahren Folgendes umfasst:

Definieren eines Maschennetzes, das dem ersten Bohrlochfluid-Unterbereich entspricht, wobei das Maschennetz mehrere Maschennetzzellen besitzt, wobei jede der mehreren Maschennetzzellen eine axiale Abmessung aufweist;
Bestimmen einer Ersten der ersten Gruppe vorhergesagter Temperaturverteilungen in einem ersten Zeitschritt, wobei die erste vorhergesagte Temperaturverteilung mehrere erste vorhergesagte Temperaturen enthält, wobei jede der mehreren ersten vorhergesagten Temperaturen einer der mehreren Maschennetzzellen entspricht;
translatorisches Bewegen des simulierten Bohrstrangs während der Operation in Übereinstimmung mit einer ausgewählten Eindringrate, wobei das translatorische Bewegen des simulierten Bohrstrangs Folgendes umfasst:

(1) Vorwärtsbewegen des simulierten Bohrstrangs, falls die ausgewählte Eindringrate positiv ist, wobei das Vorwärtsbewegen des simulierten Bohrstrangs das Erhöhen der Größe des ersten Bohrlochfluid-Unterbereichs umfasst; und/oder

(2) Zurückziehen des simulierten Bohrstrangs, falls die ausgewählte Eindringrate negativ ist, wobei das Zurückziehen des simulierten Bohrstrangs das Verringern der Größe des ersten Bohrlochfluid-Unterbereichs und das Definieren eines Stillfluid-Unterbereichs, der einem Volumen des Bohrlochfluids entspricht, das sich unter dem sich zurückziehenden simulierten Bohrstrang befindet, umfasst, wobei die mehreren Maschennetzzellen eine oder mehrere Maschennetzzellen enthalten, die dem Stillfluid-Unterbereich zugeordnet sind; und

räumliches translatorisches Bewegen der mehreren ersten vorhergesagten Temperaturen und Verwenden der räumlich translatorisch bewegten mehreren ersten vorhergesagten Temperaturen, um Anfangswerte, die jeder der mehreren Maschennetzzellen entsprechen, in einem zweiten Zeitschritt zu interpolieren; und
Bestimmen einer Zweiten der ersten Gruppe vorhergesagter Temperatur-verteilungen in dem zweiten Zeitschritt.

4.  Verfahren nach einem der Ansprüche 1-3, wobei die erste Temperaturverteilung einem ersten globalen Übergangsvolumen des simulierten Bohrlochfluids entspricht, wobei sich das erste globale Übergangsvolumen in dem simulierten Bohrstrang befindet, wobei das Verfahren ferner Folgendes umfasst:

Definieren eines dritten Modells zum Vorhersagen einer zweiten Temperaturverteilung, die dem Volumen des simulierten Bohrlochfluids zugeordnet ist, als eine Funktion einer dritten Gruppe von Parametern, wobei die zweite Temperaturverteilung einem zweiten globalen Übergangsvolumen des simulierten Bohrlochfluids entspricht und wobei sich das zweite globale Übergangsvolumen in einem Ringbereich befindet, der zwischen einer äußeren Oberfläche des simulierten Bohrstrangs und einer Oberfläche der simulierten Formation definiert ist; und
Definieren eines vierten Modells zum Vorhersagen einer Temperaturverteilung, die dem simulierten Bohrstrang zugeordnet ist, als eine Funktion einer vierten Gruppe von Parametern.

5.  Verfahren nach Anspruch 4, wobei die Temperaturverteilung, die dem simulierten Bohrstrang zugeordnet ist, unter Verwendung einer stationären Lösung vorhergesagt wird.

6.  Verfahren nach Anspruch 4, wobei sich ein oder mehrere Parameter der vierten Gruppe von Parametern als eine Funktion eines Ortes an dem simulierten Bohrstrang verändern, wobei der eine oder die mehreren Parameter der vierten Gruppe von Parametern eine Dichte des simulierten Bohrstrangs und/oder eine spezifische Wärmeleitfähigkeit des simulierten Bohrstrangs und/oder eine spezifische Wärmekapazität des simulierten Bohrstrangs enthalten.

7.  Verfahren nach Anspruch 3 oder 4, wobei sich ein oder mehrere Parameter der dritten Gruppe von Parametern als eine Funktion eines Ortes in der simulierten Formation verändern, wobei der eine oder die mehreren Parameter der dritten Gruppe von Parametern eine Dichte der simulierten Formation und/oder eine spezifische Wärmeleitfähigkeit der simulierten Formation und/oder eine spezifische Wärmekapazität der simulierten Formation enthalten

8.  Verfahren nach einem der Ansprüche 1-7, das ferner das Berechnen eines oder mehrerer Parameter der ersten Gruppe von Parametern in Reaktion auf das Bestimmen, dass eine vorhergesagte Temperaturverteilung der ersten Gruppe vorhergesagter Temperaturverteilungen einen vorgegebenen Schwellenwert überschreitet, umfasst, wobei sich der eine oder die mehreren Parameter der ersten Gruppe von Parametern als eine Funktion eines Ortes in dem Bohrloch und/oder einer Zusammensetzung des Bohrlochfluids und/oder der Zeit verändern, wobei der eine oder die mehreren Parameter der ersten Gruppe von Parametern eine Dichte des simulierten Bohrlochfluids und/oder eine rheologische Konstante, die dem simulierten Bohrlochfluid zugeordnet ist, und/oder eine spezifische Wärmleitfähigkeit des simulierten Bohrlochfluids und/oder eine spezifische Wärmekapazität des simulierten Bohrlochfluids enthalten, wobei wenigstens einer des einen oder der mehreren Parameter der ersten Gruppe von Parametern eine Funktion des Drucks und der Temperatur ist und/oder mit einer geringeren Häufigkeit als einer Häufigkeit, die dem Bestimmen der ersten Gruppe vorhergesagter Temperaturverteilungen zugeordnet ist, berechnet wird.

9.  Verfahren nach einem der Ansprüche 1-5, wobei das zweite Modell eine lineare partielle Differentialgleichung zum Modellieren enthält.

10. Verfahren nach einem der Ansprüche 1-6, wobei ein Eindringradius, der einer stationären Lösung entspricht, die der simulierten Formation zugeordnet ist, r eine Funktion der Tiefe und/oder der Zeit ist, wobei die Funktion eine Funktion des Zeitbetrags, der verstrichen ist, seit eine Bohrfluidzirkulationsoperation begonnen hat, und/oder eine Funktion eines Zeitbetrags, der verstrichen ist, seit sich ein Bohrlochende des Bohrstrangs über eine vorgegebene Tiefe hinaus vorwärts bewegt hat, enthält.

11. Verfahren nach Anspruch 3, das ferner das Ausführen mehrerer zeitbasierter Iterationen des numerischen Lösungsverfahrens umfasst, wobei die mehreren Iterationen der translatorischen Bewegung des simulierten Bohrstrangs entsprechen.

12. Verfahren nach Anspruch 3 oder 11, wobei das Vorwärtsbewegen des simulierten Bohrstrangs umfasst:

Hinzufügen wenigstens einer Maschennetzzelle zu den mehreren Maschennetzzellen, falls die ausgewählte Eindringrate positiv ist; und/oder
Entfernen wenigstens einer Maschennetzzelle aus den mehreren Maschennetzzellen, falls die ausgewählte Eindringrate negativ ist.

13. Verfahren nach einem der Ansprüche 3, 11 und 12, wobei das translatorische Bewegen des simulierten Bohrstrangs umfasst:

Ausdehnen der axialen Abmessung einer oder mehrerer der mehreren Maschennetzzellen, falls die ausgewählte Eindringrate positiv ist; und/oder
Kontrahieren der axialen Abmessung einer oder mehrerer der mehreren Maschennetzzellen, falls die ausgewählte Eindringrate negativ ist.

14. Verfahren nach einem der Ansprüche 3 und 11-13, das ferner das Bestimmen einer Dritten der ersten Gruppe vorhergesagter Temperaturverteilungen in einem dritten Zeitschritt umfasst, wobei die Operation eine Einschlussoperation zwischen dem zweiten und dem dritten Zeitschritt enthält und wobei in dem dritten Zeitschritt das erste Modell eine lineare partielle Differentialgleichung zum Modellieren enthält.

15. Verfahren nach einem der Ansprüche 3 und 11-14, wobei das numerische Lösungsverfahren wenigstens ein Verfahren enthält, das aus einer Gruppe gewählt ist, die ein Verfahren finiter Differenz, ein Verfahren finiter Elemente, ein Verfahren finiter Volumina und ein Spektralelementverfahren umfasst.

16. Verfahren zum Vorhersagen einer Temperatur eines Bohrlochfluids in einem Bohrloch, wobei das Verfahren Folgendes umfasst:

Identifizieren eines Rechenbereichs, der einem Bohrszenario zugeordnet ist;
Partitionieren des Rechenbereichs in mehrere Unterbereiche, wobei die mehreren Unterbereiche einen ersten Bohrlochfluid-Unterbereich, einen Bohrstrang-Unterbereich, einen zweiten Bohrlochfluid-Unterbereich und einen Formationsunterbereich umfassen;
Definieren mehrerer Modelle, wobei jedes der mehreren Modelle einem der mehreren Unterbereiche entspricht, wobei die mehreren Modelle jeweilige Temperaturverteilungen, die den mehreren Unterbereichen zugeordnet sind, als eine Funktion einer Gruppe von Parametern vorhersagen;
Definieren eines ersten Maschennetzes, das dem ersten Bohrlochfluid-Unterbereich entspricht, wobei das erste Maschennetz mehrere Maschennetzzellen enthält;
Definieren eines Bohrszenarios, das eine Operation simuliert, in der sich eine Tiefe eines Bohrlochendes eines simulierten Bohrstrangs mit fortschreitendem Bohrszenario ändert, wobei das Bohrszenario einen ausgewählten Translationsparameter enthält, der sich entsprechend der Änderung der Tiefe des Bohrlochendes des simulierten Bohrstrangs ändert;
Bestimmen einer ersten vorhergesagten Temperaturverteilung in einem ersten Zeitschritt anhand einer ersten geschätzten Lösung der mehreren Modelle, wobei die erste vorhergesagte Temperaturverteilung eine erste Temperatur-verteilung modelliert, die dem ersten Bohrlochfluid-Unterbereich zugeordnet ist, wobei der ausgewählte Translationsparameter einen ersten Wert in dem ersten Zeitschritt hat; und
Bestimmen einer zweiten vorhergesagten Temperaturverteilung in einem zweiten Zeitschritt anhand einer zweiten geschätzten Lösung der mehreren Modelle, wobei die zweite vorhergesagte Temperaturverteilung eine zweite Temperaturverteilung modelliert, die dem ersten Bohrlochfluid-Unterbereich zugeordnet ist, wobei der ausgewählte Translationsparameter einen zweiten, anderen Wert in dem zweiten Zeitschritt hat und wobei in dem zweiten Zeitschritt das erste Maschennetz anhand einer Differenz zwischen dem zweiten Wert des Translationsparameters und dem ersten Wert des Translationsparameters modifiziert wird.

17. Verfahren nach Anspruch 16, wobei jede der mehreren Maschennetzzellen eine axiale Abmessung aufweist und wobei die axiale Abmessung einer oder mehrerer der mehreren Maschennetzzellen einen ersten Wert im ersten Zeitschritt und einen zweiten, anderen Wert im zweiten Zeitschritt hat.

18. Verfahren nach Anspruch 16 oder 17, das ferner umfasst:

Hinzufügen wenigstens einer Maschennetzzelle zu den mehreren Maschennetzzellen, falls die Differenz zwischen dem zweiten Wert des Translationsparameters und dem ersten Wert des Translationsparameters positiv ist; und/oder
Entfernen wenigstens einer Maschennetzzelle aus den mehreren Maschennetzzellen, falls die Differenz zwischen dem zweiten Wert des Translationsparameters und dem ersten Wert des Translationsparameters negativ ist.

19. Verfahren nach einem der Ansprüche 16-18, das ferner umfasst:

Definieren eines zweiten Maschennetzes, das dem Formationsunterbereich entspricht;
Bestimmen einer dritten vorhergesagten Temperaturverteilung in dem ersten Zeitschritt anhand der ersten geschätzten Lösung der mehreren Modelle, wobei die dritte vorhergesagte Temperaturverteilung eine erste Temperaturverteilung, die dem Formationsunterbereich zugeordnet ist, modelliert; und
Bestimmen einer vierten vorhergesagten Temperaturverteilung in dem zweiten Zeitschritt anhand der zweiten geschätzten Lösung der mehreren Modelle, wobei die vierte vorhergesagte Temperaturverteilung eine zweite Temperatur-verteilung, die dem Formationsunterbereich zugeordnet ist, modelliert, wobei das Modell, das dem Formationsunterbereich entspricht, eine lineare partielle Differentialgleichung enthält.

20. Verfahren nach einem der Ansprüche 16-19, wobei sich der Translationsparameter entsprechend einer ausgewählten Eindringrate ändert.

21. Verfahren nach einem der Ansprüche 16-20, wobei die mehreren Modelle umfassen:

eine erste Übergangsadvektionsgleichung, die dem ersten Bohrlochfluid-Unterbereich entspricht;
eine zweite Übergangsadvektionsgleichung, die dem zweiten Bohrlochfluid-Unterbereich entspricht;
eine erste Übergangsleitungsgleichung, die dem Formationsunterbereich entspricht; und
eine zweite Übergangsleitungsgleichung, die dem Bohrstrang-Unterbereich entspricht.

22. Verfahren nach einem der Ansprüche 16-21, wobei das Bestimmen der ersten und der dritten vorhergesagten Temperaturverteilungen das Anwenden eines numerischen Lösungsverfahrens umfasst, um die erste geschätzte Lösung für die mehreren Modelle zu bestimmen, wobei das Ausführen des numerischen Lösungsverfahrens das Aggregieren von Iterationen des numerischen Lösungsverfahrens für jeden der mehreren Unterbereiche umfasst.

23. Verfahren nach einem der Ansprüche 16-22, wobei wenigstens eine vorhergesagte Temperaturverteilung verwendet wird, um eine oder mehrere thermische Beanspruchungen in der simulierten Formation vorherzusagen, wobei die eine oder die mehreren thermischen Beanspruchungen verwendet werden, um eine Stabilität des Bohrlochs vorherzusagen.

24. Verfahren nach einem der Ansprüche 16-23, das ferner das Ausführen einer oder mehrerer zusätzlicher Analysen, die einem oder mehreren zusätzlichen Bohrszenarios entsprechen, umfasst, wobei die eine oder die mehreren zusätzlichen Analysen parallel zu einer primären Analyse, die dem Bohrszenario entspricht, ausgeführt werden, wobei die eine oder die mehreren zusätzlichen Analysen eine Analyse, die einer Wirkung des Beendens der Zirkulation von Bohrfluid entspricht, umfassen, wobei vorhergesagte Temperaturverteilungen, die der einen oder den mehreren zusätzlichen Analysen zugeordnet sind, auf einem Graphen neben der primären Analyse, die dem Bohrszenario entspricht, aufgetragen werden.

25. Verfahren nach einem der Ansprüche 16-24, wobei ein Übergang zwischen zwei Operationen anhand eines Temperaturkriteriums simuliert wird, wobei das Temperaturkriterium durch Vergleichen einer oder mehrerer vorhergesagter Temperaturen einer vorhergesagten Temperaturverteilung an einem ausgewählten Bohrlochort in dem Bohrstrang mit einem oder mehreren vorgegebenen Werten bestimmt wird.

**26.** Verfahren nach einem der Ansprüche 16-25, das ferner das Speichern einer vorhergesagten Temperaturverteilung, die der simulierten Formation zugeordnet ist, wenn eine Differenz zwischen einer Temperatur der vorhergesagten Temperaturverteilung und einer ungestörten Formationstemperatur ein ausgewähltes Kriterium erfüllt, umfasst, wobei das ausgewählte Kriterium entweder dann erfüllt ist, wenn die Temperaturdifferenz größer als ein vorgegebener Temperaturschwellenwert ist, oder dann, wenn die Temperaturdifferenz größer als ein fester Anteil einer maximalen Differenz zwischen der Temperatur und der ungestörten Formationstemperatur bei einer ausgewählten Tiefe ist, wobei die gespeicherte vorhergesagte Temperaturverteilung über einen Bereich, der der gespeicherten vorhergesagten Temperaturverteilung zugeordnet ist, hinaus extrapoliert wird und wobei die extrapolierte Temperaturverteilung verwendet wird, um eine vorhergesagte Temperaturverteilung in einem folgenden Zeitschritt zu berechnen.

**27.** System zum Bohren eines Bohrlochs, das eine Rechenvorrichtung enthält, die einen Prozessor zum Ausführen eines Verfahrens nach einem der vorhergehenden Ansprüche umfasst, wobei das System ein Modul zum Protokollieren während des Bohrens (LWD-Modul) und/oder ein Modul zum Messen während des Bohrens (MWD-Modul) umfasst.

**28.** Verfahren nach Anspruch 27, wobei ein Bohrszenario einen Echtzeit-Bohrprozess simuliert, der zugeordnete Parameterwerte besitzt, die Echtzeitdaten entsprechen, die durch das LWD-Modul und/oder das MWD-Modul gesammelt werden, wobei die Echtzeitdaten in Abschnitte mit konstanten Betriebsbedingungen segmentiert werden, bevor eine Berechnung eine vorhergesagten Temperatur-verteilung ausgeführt wird.

## Revendications

**1.** Procédé de prédiction d'une répartition de températures pour un fluide de fond de trou pendant un scénario de forage, le procédé comprenant :

la définition d'un premier modèle de prévision d'une première répartition de températures associée à un volume d'un fluide de fond de trou simulé en fonction d'un premier jeu de paramètres ;

la définition d'un deuxième modèle de prédiction d'une répartition de températures d'une formation simulée en fonction d'un deuxième jeu de paramètres ;

la définition d'un scénario de forage qui simule une opération dans laquelle une profondeur d'une extrémité de trou de fond d'un train de tiges de forage simulé change à mesure que le scénario de forage progresse ; et

la détermination d'un premier jeu de répartitions de températures prédites, prédites sur la base du premier modèle et du deuxième modèle, le premier jeu de répartitions de températures prédites représentant des répartitions de températures du volume du fluide de fond de trou simulé à mesure que le scénario de forage progresse.

**2.** Procédé selon la revendication 1, comprenant en outre :

l'identification d'un domaine de calcul associé au scénario de forage ; et

la division du domaine de calcul en une pluralité de sous-domaines, la pluralité de sous-domaines comprenant un premier sous-domaine de fluide de fond de trou, un sous-domaine de train de tiges de forage, un second sous-domaine de fluide de fond de trou et un sous-domaine de formation.

**3.** Procédé selon la revendication 2, dans lequel la détermination du premier jeu de répartitions de températures prédites comprend l'application d'une méthode de solution numérique par rapport au premier sous-domaine de fluide de fond de trou, la méthode de solution numérique comprenant :

la définition d'une maille correspondant au premier sous-domaine de fluide de fond de trou, la maille comportant une pluralité de cellules de maille, chacune de la pluralité de cellules de maille comprenant une dimension axiale ;

la détermination d'une première répartition du premier jeu de répartitions de températures prédites à un premier pas de temps, la première répartition de températures prédites comprenant une pluralité de premières températures prédites, chacune de la pluralité de premières températures prédites correspondant à l'une de la pluralité de cellules de maille ;

la translation du train de tiges de forage simulé pendant l'opération selon un taux de pénétration sélectionné, la translation du train de tiges de forage simulé comprenant :

(1) l'avancement du train de tiges de forage simulé si le taux de pénétration sélectionné est positif, dans lequel l'avancement du train de tiges de forage simulé comprend l'augmentation de la taille du premier sous-domaine de fluide de fond de trou ; et/ou

(2) le recul du train de tiges de forage simulé si le taux de pénétration sélectionné est négatif, dans lequel le recul du train de tiges de forage simulé comprend la diminution de la taille du premier sous-domaine de fluide de fond de trou et la définition d'un sous-domaine de fluide stagnant correspondant à un volume de fluide de fond de trou situé en dessous du train de tiges de forage simulé reculé, dans lequel la pluralité de cellules de maille comprend une ou plusieurs cellules de maille associées au sous-domaine de fluide stagnant ; et

la translation spatiale de la pluralité de premières températures prédites et l'utilisation de la pluralité translatée spatialement de premières températures prédites pour interpoler des valeurs initiales correspondant à chacune de la pluralité de cellules de maille à un deuxième pas de temps ; et

la détermination d'une deuxième répartition du premier jeu de répartitions de températures prédites au deuxième pas de temps.

4. Procédé selon l'une quelconque des revendications 1 à 3, dans lequel la première répartition de températures correspond à un premier volume global transitoire du fluide de fond de trou simulé, dans lequel le premier volume global transitoire est situé au sein du train de tiges de forage simulé, le procédé comprenant en outre :

la définition d'un troisième modèle de prédiction d'une deuxième répartition de températures associée au volume du fluide de fond de trou simulé en fonction d'un troisième jeu de paramètres, où la deuxième répartition de températures correspond à un second volume global transitoire du fluide de fond de trou simulé, et où le second volume global transitoire est situé au sein d'une région annulaire définie entre une surface extérieure du train de tiges de forage simulé et une surface de la formation simulée ; et

la définition d'un quatrième modèle de prédiction d'une répartition de températures associée du train de tiges de forage simulé en fonction d'un quatrième jeu de paramètres.

5. Procédé selon la revendication 4, dans lequel la répartition de températures associée au train de tiges de forage simulé est prédite à l'aide d'une solution d'équilibre.

6. Procédé selon la revendication 4, dans lequel un ou plusieurs paramètres du quatrième jeu de paramètres varient en fonction d'un emplacement du train de tiges de forage simulé, les un ou plusieurs paramètres du quatrième jeu de paramètres comprenant au moins l'une parmi une masse volumique du train de tiges de forage simulé, une conductivité thermique du train de tiges de forage simulé et une chaleur massique du train de tiges de forage simulé.

7. Procédé selon la revendication 3 ou 4, dans lequel un ou plusieurs paramètres du troisième jeu de paramètres varient en fonction d'un emplacement de la formation simulée, les un ou plusieurs paramètres du troisième jeu de paramètres comprenant au moins l'une parmi une masse volumique de la formation simulée, une conductivité thermique de la formation simulée et une chaleur massique de la formation simulée.

8. Procédé selon l'une quelconque des revendications 1 à 7, comprenant en outre le calcul d'un ou plusieurs paramètres du premier jeu de paramètres en réponse à la détermination selon laquelle une répartition de températures prédites du premier jeu de répartitions de températures prédites dépasse un seuil prédéterminé, dans lequel les un ou plusieurs paramètres du premier jeu de paramètres varient en fonction d'au moins l'un parmi un emplacement dans le trou de forage, une composition du fluide de fond de trou et une durée, dans lequel les un ou plusieurs paramètres du premier jeu de paramètres comprennent au moins l'une parmi une masse volumique du fluide de fond de trou simulé, une constante rhéologique associée au fluide de fond de trou simulé, une conductivité thermique du fluide de fond de trou simulé, et une chaleur massique du fluide de fond de trou simulé, dans lequel au moins l'un des un ou plusieurs paramètres du premier jeu de paramètres est une fonction de pression et de température et/ou est calculé à une fréquence plus lente qu'une fréquence associée à la détermination du premier jeu de répartitions de températures prédites.

9. Procédé selon l'une quelconque des revendications 1 à 5, dans lequel le deuxième modèle comprend une équation de modélisation différentielle partielle et linéaire.

10. Procédé selon l'une quelconque des revendications 1 à 6, dans lequel un rayon de pénétration correspondant à une solution d'équilibre associée à la formation simulée est une fonction d'au moins l'un parmi la profondeur et la durée, ladite fonction comprenant au moins l'une d'une fonction d'une quantité de temps qui s'est écoulé depuis qu'une opération de circulation de fluide de forage a débuté et une fonction d'une quantité de temps qui s'est écoulé depuis qu'une extrémité de fond de trou de train de tiges de forage a avancé au-delà d'une profondeur prédéterminée.

11. Procédé selon la revendication 3, comprenant en outre la réalisation d'une pluralité d'itérations temporelles de la méthode de solution numérique, la pluralité d'itérations correspondant à la translation du train de tiges de forage simulé.

12. Procédé selon la revendication 3 ou 11, dans lequel l'avancement du train de tiges de forage simulé comprend :

l'ajout d'au moins une cellule de maille à la pluralité de cellules de maille si le taux de pénétration sélectionné est positif ; et/ou
le retrait d' au moins une cellule de maille de la pluralité de cellules de maille si le taux de pénétration sélectionné est négatif.

13. Procédé selon l'une quelconque des revendications 3, 11 et 12, dans lequel la translation du train de tiges de forage simulé comprend :

l'agrandissement de la dimension axiale d'une ou plusieurs de la pluralité de cellules de maille si le taux de pénétration sélectionné est positif ; et/ou
le rétrécissement de la dimension axiale d'une ou plusieurs de la pluralité de cellules de maille si le taux de pénétration sélectionné est négatif.

14. Procédé selon l'une quelconque des revendications 3 et 11 à 13, comprenant en outre la détermination d'une troisième répartition du premier jeu de répartitions de températures prédites à un troisième pas de temps, dans lequel l'opération comprend une opération de fermeture entre les deuxième et troisième pas de temps, et dans lequel, au troisième pas de temps, le premier modèle comprend une équation de modélisation différentielle partielle et linéaire.

15. Procédé selon l'une quelconque des revendications 3 et 11 à 14, dans lequel la méthode de solution numérique comprend au moins une méthode sélectionnée dans un groupe comprenant une méthode des différences finies, une méthode des éléments finis, une méthode des volumes finis et une méthode des éléments spectraux.

16. Procédé de prédiction d'une température d'un fluide de fond de trou au sein d'un trou de forage, le procédé comprenant :

l'identification d'un domaine de calcul associé à un scénario de forage ;
la division du domaine de calcul en une pluralité de sous-domaines, la pluralité de sous-domaines comprenant un premier sous-domaine de fluide de fond de trou, un sous-domaine de train de tiges de forage, un second sous-domaine de fluide de fond de trou et un sous-domaine de formation ;
la définition d'une pluralité de modèles, chacun de la pluralité de modèles correspondant à l'un de la pluralité de sous-domaines, où la pluralité de modèles prédit respectivement des répartitions de températures associées à la pluralité de sous-domaines en fonction d'un jeu de paramètres ;
la définition d'une première maille correspondant au premier sous-domaine de fluide de fond de trou, où la première maille comprend une pluralité de cellules de maille ;
la définition d'un scénario de forage qui simule une opération lors de laquelle une profondeur d'une extrémité de fond de trou d'un train de tiges de forage simulé change à mesure que le scénario de forage progresse, le scénario de forage comprenant un paramètre de translation sélectionné qui change selon le changement de profondeur de l'extrémité de fond de trou du train de tiges de forage simulé ;
la détermination d'une première répartition de températures prédites à un premier pas de temps sur la base d'une première solution estimée de la pluralité de modèles, la première répartition de températures prédites modélisant une première répartition de températures associée au premier sous-domaine de fluide de fond de trou, où le paramètre de translation sélectionné a une première valeur au premier pas de temps ; et
la détermination d'une deuxième répartition de températures prédites à un deuxième pas de temps sur la base d'une seconde solution estimée de la pluralité de modèles, la deuxième répartition de températures prédites modélisant une deuxième répartition de températures associée au premier sous-domaine de fluide de fond de trou, où le paramètre de translation sélectionné a une seconde valeur différente au deuxième pas de temps et, où, au deuxième pas de temps, la première maille est modifiée sur la base d'une différence entre la seconde valeur du paramètre de translation et la première valeur du paramètre de translation.

17. Procédé selon la revendication 16, dans lequel chacune de la pluralité de cellules de maille comprend une dimension axiale, et dans lequel la dimension axiale d'une ou plusieurs de la pluralité de cellules de maille a une première valeur au premier pas de temps et une seconde valeur différente au deuxième pas de temps.

18. Procédé selon la revendication 16 ou 17, comprenant en outre :

l'ajout d'au moins une cellule de maille à la pluralité de cellules de maille si la différence entre la seconde valeur du paramètre de translation et la première valeur du paramètre de translation est positive ; et/ou le retrait d' au moins une cellule de maille de la pluralité de cellules de maille si la différence entre la seconde valeur du paramètre de translation et la première valeur du paramètre de translation est négative.

19. Procédé selon l'une quelconque des revendications 16 à 18, comprenant en outre :

la définition d'une seconde maille correspondant au sous-domaine de formation ; la détermination d'une troisième répartition de températures prédites au premier pas de temps sur la base de la première solution estimée de la pluralité de modèles, où la troisième répartition de températures prédites modélise une première répartition de températures associée au sous-domaine de formation ; et la détermination d'une quatrième répartition de températures prédites au deuxième pas de temps sur la base de la seconde solution estimée de la pluralité de modèles, où la quatrième répartition de températures prédites modélise une deuxième répartition de températures associée au sous-domaine de formation, où le modèle correspondant au sous-domaine de formation comprend une équation différentielle partielle et linéaire.

20. Procédé selon l'une quelconque des revendications 16 à 19, dans lequel le paramètre de translation change selon un taux de pénétration sélectionné.

21. Procédé selon l'une quelconque des revendications 16 à 20, la pluralité de modèles comprenant :

une première équation d'advection transitoire correspondant au premier sous-domaine de fluide de fond de trou ; une seconde équation d'advection transitoire correspondant au second sous-domaine de fluide de fond de trou ; une première équation de conduction transitoire correspondant au sous-domaine de formation ; et une seconde équation de conduction transitoire correspondant au sous-domaine de train de tiges de forage.

22. Procédé selon l'une quelconque des revendications 16 à 21, dans lequel la détermination des première et troisième répartitions de températures prédites comprend l'application d'une méthode de solution numérique pour déterminer la première solution estimée à la pluralité de modèles, dans lequel la réalisation de la méthode de solution numérique comprend l'agrégation d'itérations de la méthode de solution numérique pour chacun de la pluralité de sous-domaines.

23. Procédé selon l'une quelconque des revendications 16 à 22, dans lequel au moins une répartition de températures prédites est utilisée pour prédire une ou plusieurs contraintes thermiques au sein de la formation simulée, dans lequel les une ou plusieurs contraintes thermiques sont utilisées pour prédire une stabilité du trou de forage.

24. Procédé selon l'une quelconque des revendications 16 à 23, comprenant en outre la réalisation d'une ou plusieurs analyses supplémentaires correspondant à un ou plusieurs scénarios de forage supplémentaires, dans lequel les une ou plusieurs analyses supplémentaires sont réalisées en parallèle à une analyse primaire correspondant au scénario de forage, dans lequel les une ou plusieurs analyses supplémentaires comprennent une analyse correspondant à un effet d'arrêt de circulation de fluide de forage, dans lequel les répartitions de températures prédites associées aux une ou plusieurs analyses supplémentaires sont tracées sur un graphique le long de l'analyse primaire correspondant au scénario de forage.

25. Procédé selon l'une quelconque des revendications 16 à 24, dans lequel une transition entre deux opérations est simulée sur la base d'un critère de température, dans lequel le critère de température est déterminé en comparant une ou plusieurs températures prédites d'une répartition de températures prédites à un emplacement de fond de trou sélectionné au sein du train de tiges de forage à une ou plusieurs valeurs prédéterminées.

26. Procédé selon l'une quelconque des revendications 16 à 25, comprenant en outre le stockage d'une répartition de températures prédites associée à la formation simulée lorsqu'une différence entre une température de la répartition de températures prédites et une température de formation non perturbée satisfait un critère sélectionné, dans lequel le critère sélectionné est satisfait soit lorsque la différence de température est supérieure à un seuil prédéterminé soit lorsque la différence de température est supérieure à une proportion fixe d'une différence maximale entre la température et la température de formation non perturbée à une profondeur sélectionnée, dans lequel la répartition de températures prédites stockée est extrapolée au-delà d'une région associée à la répartition de températures prédites stockée, et dans lequel la répartition de températures extrapolée est utilisée pour calculer informatiquement une répartition de températures prédites à un pas de temps suivant.

27. Système de forage d'un puits qui comprend un dispositif de calcul informatique comprenant un processeur permettant de réaliser un procédé selon l'une quelconque des revendications précédentes, dans lequel ledit système comprend au moins l'un parmi un module de diagraphie en cours de forage (LWD) et un module de mesure en cours de forage (MWD).

28. Procédé selon la revendication 27, dans lequel un scénario de forage simule un processus de forage en temps réel ayant des valeurs de paramètre associées qui correspondent à des données en temps réel recueillies par au moins l'un du module LWD et du module MWD, dans lequel les données en temps réel sont segmentées en portions de conditions constantes de fonctionnement avant qu'un calcul d'une répartition de températures prédites soit réalisé.

FIG. 1

162 — DEFINE A FIRST MODEL FOR PREDICTING A FIRST TEMPERATURE DISTRIBUTION ASSOCIATED WITH A VOLUME OF SIMULATED DOWNHOLE FLUID

164 — DEFINE A SECOND MODEL FOR PREDICTING A TEMPERATURE DISTRIBUTION OF A SIMULATED FORMATION

166 — DEFINE A DRILLING SCENARIO THAT SIMULATES AN OPERATION

168 — DETERMINE A SET OF TEMPERATURE DISTRIBUTIONS PREDICTED BASED ON THE FIRST MODEL AND THE SECOND MODEL

160

# FIG. 2

FIG. 3

FIG. 4

FIG. 5

FIG. 6

FIG. 7

FIG. 8

FIG. 9

510 — DETERMINE A SET OF PARAMATERS FOR A DRILLING SCENARIO

512 — IDENTIFY CALCULATION DOMAIN

514 — PARTITION CALCULATION DOMAIN INTO SUB-DOMAINS

516 — DEFINE A MODEL CORRESPONDING TO EACH SUB-DOMAIN

518 — DEFINE A MESH FOR EACH SUB-DOMAIN

520 — DETERMINE INITIAL CONDITIONS

522 — DETERMINE PREDICTED TEMPERATURE DISTRIBUTIONS FOR EACH SUB-DOMAIN

524 — SIMULATE PROGRESSION OF AN OPERATION

526 — DETERMINE INITIAL CONDITIONS FOR A NEXT TIME STEP

528 — DETERMINE PREDICTED TEMPERATURE DISTRIBUTIONS FOR EACH SUB-DOMAIN AT THE NEXT TIME STEP

530

500

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• GB 2399418 A